# EUROPÄISCHE PATENTSCHRIFT

(11) **EP 3 045 743 B1**
(45) Veröffentlichungstag und Bekanntmachung des Hinweises auf die Patenterteilung: **29.03.2017**
(21) Anmeldenummer: 15198151.1
(22) Anmeldetag: 07.12.2015
(51) Int. Cl.: F16B 35/06, F16B 5/06

(54) **TRAGSTRUKTURHALTERUNG FÜR EINEN FLUIDVERTEILER, MONTAGEANORDNUNG UND VERFAHREN ZUR MONTAGE EINES FLUIDVERTEILERS**
SUPPORT STRUCTURE BRACKET FOR A FLUID DISTRIBUTOR, MOUNTING ASSEMBLY AND METHOD FOR MOUNTING A FLUID DISTRIBUTOR
FIXATION DE STRUCTURE PORTEUSE POUR UN REPARTITEUR DE FLUIDE, AGENCEMENT DE MONTAGE ET PROCEDE DE MONTAGE D'UN REPARTITEUR DE FLUIDE

(30) Priorität: 19.01.2015 DE 102015100648
(43) Veröffentlichungstag der Anmeldung: 20.07.2016
(73) Patentinhaber: SBK Siegfried Böhnisch Kunststofftechnik GmbH, 74632 Neuenstein (DE)
(72) Erfinder: Böhnisch, Andreas A., 74613 Öhringen (DE)
(74) Vertreter: Geitz Truckenmüller Lucht Christ

(56) Entgegenhaltungen:
- DE-A1-102012 105 197
- US-A- 4 288 902

## Beschreibung

Die Erfindung betrifft eine Tragstrukturhalterung, insbesondere eine Wandhalterung, für wenigstens einen Fluidverteiler, vorzugsweise Wasserverteiler, insbesondere für einen Heizkreis-Fluidverteiler, umfassend einen Halterungsgrundkörper, der eine Tragstrukturanlagefläche, insbesondere Wandanlagefläche, zur Anlage an einer Tragstruktur, insbesondere Wand, und wenigstens einen Aufnahmebereich zur Aufnahme des Fluidverteilers aufweist, wobei der Aufnahmebereich wenigstens ein erstes, insbesondere unteres, Rastelement zum in Eingriff bringen mit einer ersten Rastaufnahme des Fluidverteilers und wenigstens ein zweites, insbesondere oberes, Rastelement zum in Eingriff bringen mit einer zweiten Rastaufnahme des Fluidverteilers aufweist. Die Erfindung betrifft auch ein Verfahren zur Montage eines Fluidverteilers an einer bzw. der erfindungsgemäßen Tragstrukturhalterung.

Eine derartige Tragstrukturhalterung und ein derartiges Montageverfahren sind beispielsweise aus der DE 10 2012 105 197 A1 und aus der parallelen EP 2 674 681 A1 bekannt geworden. Daraus geht eine Wandhalterung hervor, die einen Halterungsgrundkörper umfasst, der eine vorzugsweise ebene Wandauflagefläche zur Befestigung an einer Wand aufweist. Der Halterungsgrundkörper hat zwei Aufnahmebereiche zur Aufnahme jeweils eines Gehäuses eines Heißkreisverteilers. Jeder Aufnahmebereich weist ein oberes Rastelement und ein unteres Rastelement auf, die jeweils mit einer entsprechenden Rastaufnahme des jeweiligen Heizkreisverteilergehäuses in Eingriff bringbar sind. Das obere Rastelement und das untere Rastelement sind jeweils als einstückiger Bestandteil des Halterungsgrundkörpers ausgebildet. Das jeweilige obere Rastelement ist Bestandteil eines vergleichsweise dünnen Wandteils des Halterungsgrundkörpers, wobei dieser Wandteil außerdem mit einem als Dehnungsfuge ausgebildeten Dehnungselement versehen ist. Dadurch wird dem oberen Rastelement eine gewisse Flexibilität verliehen. Alternativ kann das Dehnungselement auch aus einem gegenüber dem Material des Halterungsgrundkörpers elastischeren Material hergestellt sein. Oberhalb, jedoch beabstandet von dem jeweiligen oberen Rastelement befindet sich jeweils eine Ausnehmung zur Aufnahme eines in die Ausnehmung passenden separaten Verriegelungskörpers, der mittels einer separaten Schraube, die mittels eines Werkzeugs ein- bzw. ausschraubbar ist, mit dem Halterungsgrundkörper verbindbar ist.

Die Heizkreisverteiler ergeben zusammen mit der Wandhalterung ein Installations-Montagesystem. Zur Montage des In-stallations-Montagesystems an einer Wand oder an einer entsprechenden Tragstruktur wird zunächst der Halterungsgrundkörper der Wandhalterung mittels Schrauben an der Wand oder Tragstruktur befestigt, wobei die Wandauflage zur Wand bzw. zur Tragstruktur gerichtet ist. Danach wird zunächst einer der Heizkreisverteiler in den oberen Aufnahmebereich des Halterungsgrundkörpers aufgenommen. Anschließend wird der andere Heizkreisverteiler in den unteren Aufnahmebereich aufgenommen. In beiden Fällen wird dazu zunächst das untere Rastelement des Aufnahmebereichs in eine als Nut ausgebildete untere Rastaufnahme des Heizkreisverteilers eingeführt, worauf der Heizkreisverteiler so lange drehend in Richtung des Aufnahmebereichs bewegt wird, bis das obere Rastelement des Aufnahmebereichs rastend in eine ebenfalls als Nut ausgebildete obere Rastaufnahme des Heizkreisverteilers aufgenommen ist. Die für diesen Vorgang erforderliche Flexibilität des das obere Rastelement aufweisenden besagten Wandteils des Halterungsgrundkörpers im Bereich des Aufnahmebereichs kommt durch das als Fuge ausgebildete Dehnungselement und durch die Ausnehmung für den separaten Verriegelungskörper zustande. Zur Arretierung des in dem Aufnahmebereich aufgenommenen Heizkreisverteilers wird der separate Verriegelungskörper in die zugehörige Ausnehmung eingeführt und mittels der separaten Schraube an dem Halterungsgrundkörper befestigt. Auf diese Weise wird lediglich die Starrheit des Halterungsgrundkörpers erhöht, so dass der in dem Aufnahmebereich aufgenommene Heizkreisverteiler nicht ohne Werkzeugeinsatz oder Gewalteinwirkung aus dem Aufnahmebereich entfernt werden kann. Der Verriegelungskörper berührt nach der Montage des Heizkreisverteilers diesen nicht, ist also beabstandet zu diesem angeordnet.

Diese Konstruktion hat den Nachteil, dass entweder der Verriegelungskörper und die Schraube für dessen Befestigung an dem Halterungsgrundkörper als lose Teile an die Montagestelle transportiert werden müssen oder dass dann, wenn der Verriegelungskörper bereits mittels der Schraube an dem Halterungskörper vormontiert ist, die Schraube an der Montagestelle ganz oder zumindest so weit herausgeschraubt werden muss, dass der Verriegelungskörper komplett aus der zugehörigen Ausnehmung des Halterungsgrundkörpers entfernt werden kann, um sicherzustellen, dass zum Zwecke einer Montage des Heizkreisverteilers mit seinem Gehäuse in dem Aufnahmebereich der mit dem oberen Rastelement versehene flexible Wandteil des Halterungsgrundkörpers beim Eindrehen des Heizkreisverteilers elastisch in die Ausnehmung zurückgedrängt bzw. ausgelenkt werden kann. Nach dem Eindrehen des Heizkreisverteilers in den Aufnahmebereich ist der flexible Wandteil des Halterungsgrundkörpers dann aufgrund der wirksamen elastischen Rückstellkräfte wieder zurück gestellt. Erst dann kann und muss die Schraube wieder in den Verriegelungskörper eingesetzt bzw. dort wieder soweit eingeschraubt und angezogen werden, bis der Verriegelungskörper vollständig in der passenden Ausnehmung platziert ist, um die erforderliche Starrheit des besagten Wandteils des Halterungsgrundkörpers und dadurch eine sichere Arretierung des in dem Aufnahmebereich aufgenommenen Heizkreisverteilers zu erreichen.

Es ist eine Aufgabe der Erfindung, eine Tragstrukturhalterung der eingangs genannten Art und Verfahren zur Montage eines Fluidverteilers an einer Tragstrukturhalterung zur Verfügung zu stellen, mit welcher die vorstehenden Nachteile vermieden werden, insbesondere wobei der Aufbau der Tragstrukturhalterung weiter vereinfacht ist und wobei eine weiter vereinfachte Montage eines Fluidverteilers ermöglicht ist.

Diese Aufgabe wird mit Bezug auf die Tragstrukturhalterung insbesondere dadurch gelöst, dass an dem Halterungsgrundkörper ein Dreh-Befestigungskörper zum lösbaren Befestigen des Fluidverteilers in dem Aufnahmebereich des Halterungsgrundkörper, vorzugsweise lösbar, befestigt ist, und wobei der Dreh-Befestigungskörper um eine Drehachse von einer Dreh-Fixierstellung in eine Dreh-Verriegelungsstellung, und umgekehrt, drehbar ist und das zweite Rastelement umfasst, und wobei das zweite Rastelement einen flexiblen, ersten Rastelement-Teil zur Fixierung des Fluidverteilers in der Dreh-Fixierstellung des Dreh-Befestigungskörpers in dem Aufnahmebereich, vorzugsweise gegen unbeabsichtigtes Herausdrehen und/oder gegen Herausfallen des Fluidverteilers in der Dreh-Fixierstellung des Dreh-Befestigungskörpers aus dem Aufnahmebereich in einer Vormontage-Stellung, umfasst, vorzugsweise in welcher sowohl eine Ausrichtverschiebung des Fluidverteilers relativ zu dem Dreh-Befestigungskörper und damit relativ zu dem Halterungsgrundkörper als auch ein Wegnehmen des Fluidverteilers von dem Halterungsgrundkörper ermöglicht ist, und wobei das zweite Rastelement einen starren, zweiten Rastelement-Teil zum Verriegeln des Fluidverteilers in der Dreh-Verriegelungsstellung des Dreh-Befestigungskörpers in dem Aufnahmebereich in einer Fertigmontage-Stellung umfasst, vorzugsweise in welcher der Fluidverteiler in der Dreh-Verriegelungsstellung des Dreh-Befestigungskörpers in dem Aufnahmebereich des Halterungsgrundkörpers arretiert ist, vorzugsweise derart, dass der Fluidverteiler nicht ohne Werkzeugeinsatz oder Gewalteinwirkung zumindest in einer Richtung parallel zu einer gedachten, die Drehachse des Dreh-Befestigungskörpers enthaltenden Bewegungsebene aus dem Aufnahmebereich wegnehmbar bzw. entfernbar ist.

Zusammengefasst kann die Erfindung im Kern auch wie folgt dargestellt werden: Bei der eingangs erwähnten Tragstukturhalterung ist ein Dreh-Befestigungskörper zum lösbaren Befestigen eines Fluidverteilers an dem Halterungsgrundkörper vorgesehen, der an dem Halterungsgrundkörper relativ zu diesem um eine Drehachse von einer ersten Drehstellung bzw. Dreh-Fixierstellung in eine zweite Drehstellung bzw. Dreh-Verriegelungsstellung, und umgekehrt, drehbar befestigt ist, und der sowohl einen flexiblen Rastelement-Teil bzw. ein flexibles Rastelement als auch einen starren Rastelement-Teil bzw. ein starres Rastelement umfasst, von denen abhängig von den vorgenannten Drehstellungen des Dreh-Befestigungskörpers, entweder der flexible Rastelement-Teil bzw. das flexible Rastelement des Dreh-Befestigungskörpers oder der starre Rastelement-Teil bzw. das starre Rastelement des Dreh-Befestigungskörpers mit einer Rastaufnahme des Fluidverteilers in Eingriff bringbar sind.

Gemäß einer vorteilhaften Weiterbildung kann vorgesehen sein, dass der Halterungsgrundkörper einen sich quer oder senkrecht zu der Drehachse des Dreh-Befestigungskörpers erstreckenden Fixierkörper aufweist und dass der Dreh-Befestigungskörper einen sich quer oder senkrecht zu seiner Drehachse erstreckenden Sicherungskörper aufweist, die derart aufeinander abgestimmt angeordnet und ausgebildet sind, dass der Sicherungskörper des Dreh-Befestigungskörpers in der Dreh-Verriegelungsstellung des Dreh-Befestigungskörpers den Fixierkörper des Halterungsgrundkörpers hintergreift, so dass dann der Dreh-Befestigungskörper mit dem Halterungsgrundkörper gegen Abheben von dem Halterungsgrundkörper und/oder gegen Ausheben aus dem Aufnahmebereich, zumindest in einer Richtung parallel zu der Drehachse des Dreh-Befestigungskörpers gesichert, vorzugsweise unverlierbar, verbunden ist.

Alternativ kann gemäß einer ganz besonders bevorzugten Weiterbildung vorgesehen sein, dass der Halterungsgrundkörper einen ersten Fixierkörper und einen zweiten Fixierkörper aufweist, wobei der erste Fixierkörper und der zweite Fixierkörper gegenüber liegend angeordnet sind und sich in einer Richtung quer oder senkrecht zu der Drehachse des Dreh-Befestigungskörpers aufeinander zu erstrecken und/oder dass der Dreh-Befestigungskörper einen ersten Sicherungskörper und einen zweiten Sicherungskörper aufweist, vorzugsweise wobei der erste Sicherungskörper und der zweite Sicherungskörper sich in einer Richtung quer oder senkrecht von der Drehachse des Dreh-Befestigungskörpers voneinander weg erstrecken, vorzugsweise und wobei der erste und der zweite Fixierkörper sowie der erste und der zweite Sicherungskörper derart aufeinander abgestimmt angeordnet und ausgebildet sind, dass der erste Sicherungskörper des Dreh-Befestigungskörpers in der Dreh-Verriegelungsstellung des Dreh-Befestigungskörpers den ersten Fixierkörper des Halterungsgrundkörpers hintergreift und der zweite Sicherungskörper des Dreh-Befestigungskörpers den zweiten Fixierkörper des Halterungsgrundkörpers hintergreift, so dass dann der Dreh-Befestigungskörper mit dem Halterungsgrundkörper gegen Abheben von dem Halterungsgrundkörper und/oder gegen Ausheben aus dem Aufnahmebereich, zumindest in einer Richtung parallel zu der Drehachse des Dreh-Befestigungskörpers, gesichert, vorzugsweise unverlierbar, verbunden ist.

Gemäß einer ganz besonders vorteilhaften Ausführungsvariante kann vorgesehen sein, dass es sich bei dem oder jedem Fixierkörper des Halterungsgrundkörpers um einen oder jeweils um einen Fixierschenkel handelt und dass es sich bei dem oder jedem Sicherungskörper des Dreh-Befestigungskörpers um einen oder jeweils um einen Sicherungsschenkel handelt, wobei der oder jeder Fixierschenkel des Halterungsgrundkörpers in der Dreh-Verriegelungsstellung des Dreh-Befestigungskörpers in eine oder jeweils in eine von dem oder jedem Sicherungsschenkel des Dreh-Befestigungskörpers begrenzte Sicherungsnut des Dreh-Befestigungskörpers eingreift und/oder wobei der oder jeder Sicherungsschenkel des Dreh-Befestigungskörpers in der Dreh-Verriegelungsstellung des Dreh-Befestigungskörpers in eine oder jeweils in eine von dem oder jedem Fixierschenkel des Halterungsgrundkörpers begrenzte Sicherungsnut des Halterungsgrundkörpers eingreift.

Dabei kann vorgesehen sein, dass die oder jede Sicherungsnut des Dreh-Befestigungskörpers in Richtung der Drehachse des Drehbefestigungskörpers betrachtet eine Nutbreite oder jeweils eine Nutbreite oder jeweils eine Nutbreite aufweist und dass der oder jeder Fixierschenkel des Halterungsgrundkörpers in Richtung der Drehachse des Drehbefestigungskörpers betrachtet eine oder jeweils eine Schenkelbreite oder Fixierschenkel-Dicke aufweist, die derart aufeinander abgestimmt sind, dass der Dreh-Befestigungskörper in der Dreh-Verriegelungsstellung an dem Halterungsgrundkörper in Richtung seiner Drehachse betrachtet mit geringem Spiel oder spielfrei geführt gelagert ist und/oder dass die oder jede Sicherungsnut des Halterungsgrundkörpers in Richtung der Drehachse des Dreh-Befestigungskörpers betrachtet eine oder jeweils eine Nutbreite aufweist und dass der oder jeder Sicherungsschenkel des Drehbefestigungskörpers in Richtung der Drehachse des Dreh-Befestigungskörpers betrachtet eine oder jeweils eine Schenkelbreite aufweist, die derart aufeinander abgestimmt sind, dass der Dreh-Befestigungskörper in der Dreh-Verriegelungsstellung an dem Halterungsgrundkörper in Richtung seiner Drehachse betrachtet mit geringem Spiel oder spielfrei geführt gelagert ist.

Gemäß einer bevorzugten Ausgestaltung kann vorgesehen sein, dass der Dreh-Befestigungskörper eine erste Anschlagfläche aufweist und dass der Halterungsgrundkörper einen ersten Drehbegrenzungs-Anschlag zur Begrenzung einer Drehung des Dreh-Befestigungskörpers in einer ersten Drehrichtung aufweist, an dem bei einer Drehung des Dreh-Befestigungskörpers in der ersten Drehrichtung der Dreh-Befestigungskörper mit seiner ersten Anschlagfläche anschlagen kann, so dass der Dreh-Befestigungskörper nicht über die Dreh-Fixierstellung hinaus in der ersten Drehrichtung drehbar ist und/oder dass der Dreh-Befestigungskörper eine zweite Anschlagfläche aufweist und dass der Halterungsgrundkörper einen zweiten Drehbegrenzungs-Anschlag zur Begrenzung einer Drehung des Dreh-Befestigungskörpers in einer zweiten Drehrichtung, vorzugsweise entgegengesetzt zu der ersten Drehrichtung, aufweist, an dem bei einer Drehung des Dreh-Befestigungskörpers in der zweiten Drehrichtung der Dreh-Befestigungskörper mit seiner zweiten Anschlagfläche anschlagen kann, so dass der Dreh-Befestigungskörper nicht über die Dreh-Verriegelungsstellung hinaus in der zweiten Drehrichtung drehbar ist. Dadurch kann die Betätigung und Bedienung sicherer gemacht werden.

Gemäß einer bevorzugten Weiterbildung kann vorgesehen sein, dass die Dreh-Fixierstellung des Dreh-Befestigungskörpers gegenüber der Dreh-Verriegelungsstellung des Dreh-Befestigungskörpers um einen Drehwinkel von mehr als 45 Grad oder von etwa 90 Grad um die Drehachse des Dreh-Befestigungskörpers versetzt ist. Dadurch lässt sich eine weitere Verbesserung im Sinne der vorstehenden Vorteile erreichen.

Gemäß einer vorteilhaften Weiterbildung kann vorgesehen sein, dass der Dreh-Befestigungskörper ein Befestigungsende und ein von diesem in Richtung seiner Drehachse weg weisendes Betätigungsende aufweist. Dies erlaubt eine weiter vereinfachte Montage und Betätigung.

Dabei kann vorgesehen sein, dass der Dreh-Befestigungskörper an seinem Befestigungsende ein Rastelement aufweist, über welches der Dreh-Befestigungskörper mit einer Rastaufnahme des Halterungsgrundkörpers unter Ausbildung einer Schnappverbindung lösbar verbunden ist. Dadurch kann die Montage noch weiter vereinfacht werden und es ist eine unverlierbare Befestigung des Dreh-Befestigungskörpers an der Halterung bzw. an dem Halterungsgrundkörper ermöglicht.

Gemäß einer bevorzugten Ausgestaltung kann vorgesehen sein, dass es sich bei dem Rast- oder Schnappelement um wenigstens einen Schnapphaken handelt, der mit einem bzw. jeweils einem Hakenteil einen Ausnehmungsrand einer Ausnehmung, vorzugsweise einen Öffnungsrand einer Durchgangsöffnung, des Halterungsgrundkörpers hintergreift. Dadurch lässt sich eine weitere Verbesserung im Sinne der vorstehenden Vorteile erreichen.

Bevorzugt kann der Dreh-Befestigungskörper an seinem Betätigungsende eine Werkzeugaufnahme zum Drehen des Dreh-Befestigungskörpers mittels eines passenden Werkzeugs aufweisen. Bei der Werkzeugaufnahme kann es sich bevorzugt um einen Schlitz, beispielsweise für einen Schraubendreher, oder um einen Innensechskant, beispielsweise für einen Inbusschlüssel handeln. Dadurch kann die Bedienung bzw. Betätigung weiter vereinfacht werden.

Gemäß einer bevorzugten Weiterbildung kann vorgesehen sein, dass der Halterungsgrundkörper einen die Tragstrukturanlagefläche aufweisenden Basiskörper zur Befestigung der Tragstrukturhalterung an der Tragstruktur aufweist und ferner eine den Aufnahmebereich und den Dreh-Befestigungskörper enthaltene Halterung für den Fluidverteiler aufweist, die einteilig und unlösbar oder mehrteilig und lösbar mit dem Basiskörper verbunden ist oder miteinander verbunden sind.

Vorzugsweise können der Basiskörper und/oder die Halterung aus, vorzugsweise thermoplastischem, Kunststoff ausgebildet sein. Dies ermöglicht eine noch kostengünstigere Herstellung bzw. Montage der Tragstrukturhalterung. Gemäß einer vorteilhaften Ausgestaltung kann vorgesehen sein, dass der Dreh-Befestigungskörper einteilig und/oder aus, vorzugsweise thermoplastischem, Kunststoff ausgebildet ist und/oder dass der Halterungsgrundkörper aus, vorzugsweise thermoplastischem, Kunststoff ausgebildet ist bzw. sind. Dadurch kann die Tragstrukturhalterung noch kostengünstiger bei zugleich geringem Gewicht hergestellt werden.

Gemäß einer vorteilhaften Ausführungsvariante kann vorgesehen sein, dass der starre, zweite Rastelement-Teil eine exzentrisch zu der Drehachse verlaufende Rastelement-Außenkontur zum Festklemmen des in dem Aufnahmebereich aufgenommenen Fluidverteilers in der Fertigmontage-Stellung gegen ein Bewegen des Fluidverteilers in beliebigen Richtungen relativ zu dem Aufnahmebereich aufweist.

Gemäß einer ganz besonders vorteilhaften Ausführungsvariante kann vorgesehen sein, dass der Halterungsgrundkörper bzw. die Halterung einen starren Befestigungs- und/oder Stützkörper, insbesondere eine Stütznase, für den Dreh-Befestigungskörper mit wenigstens einer Rastaufnahme umfasst, an oder in welcher der starre zweite Rastelement-Teil bzw. das starre, zweite Rastelement des Dreh-Befestigungskörpers oder wenigstens ein starrer weiterer Rastelement-Teil des Dreh-Befestigungskörpers in der Dreh-Verriegelungsstellung des Dreh-Befestigungskörpers verrastet ist oder verrastet aufgenommen ist.

Die Erfindung betrifft auch eine Montageanordnung, die wenigstens eine erfindungsgemäße Tragstrukturhalterung und wenigstens einen Fluidverteiler, insbesondere einen Wasserverteiler, vorzugsweise einen Heizkreis-Fluidverteiler, mit einem sich über eine Gehäuselänge erstreckenden Gehäuse umfasst, dessen Außenwandungen wenigstens eine erste Rastaufnahme und wenigstens eine zweite Rastaufnahme aufweisen, die derart angeordnet und ausgebildet sind, dass das erste Rastelement des Aufnahmebereichs der Tragstrukturhalterung in oder an der ersten Rastaufnahme verrastbar oder verrastend aufnehmbar ist und dass das zweite Rastelement des Aufnahmebereichs bzw. des Dreh-Befestigungskörpers der Tragstrukturhalterung in oder an der zweiten Rastaufnahme verrastbar oder verrastend aufnehmbar ist, wobei der Fluidverteiler über seine erste Rastaufnahme in oder an dem ersten Rastelement des Aufnahmebereichs verrastet ist oder verrastend in dem Aufnahmebereich aufgenommen ist, und wobei der Fluidverteiler über seine zweite Rastaufnahme entweder in der Dreh-Fixierstellung des Dreh-Befestigungskörpers in oder an dem flexiblen, ersten Rastelement-Teil des Dreh-Befestigungskörpers oder in der Dreh-Verriegelungsstellung in oder an dem starren, zweiten Rastelement-Teil des Dreh-Befestigungskörpers verrastet ist oder verrastend in dem Aufnahmebereich aufgenommen ist.

Die Erfindung betrifft auch eine Montageanordnung, die wenigstens eine erfindungsgemäße Tragstrukturhalterung und wenigstens einen Fluidverteiler, insbesondere einen Wasserverteiler, vorzugsweise einen Heizkreis-Fluidverteiler, mit einem sich über eine Gehäuselänge erstreckenden Gehäuse umfasst, dessen Außenwandungen wenigstens eine erste Rastaufnahme und wenigstens eine zweite Rastaufnahme aufweisen, die derart angeordnet und ausgebildet sind, dass das erste Rastelement des Aufnahmebereichs der Tragstrukturhalterung in oder an der ersten Rastaufnahme verrastbar oder verrastend aufnehmbar ist und dass das zweite Rastelement des Aufnahmebereichs bzw. des Dreh-Befestigungskörpers der Tragstrukturhalterung in oder an der zweiten Rastaufnahme verrastbar oder verrastend aufnehmbar ist, wobei der Fluidverteiler über seine erste Rastaufnahme in oder an dem ersten Rastelement des Aufnahmebereichs verrastet oder verrastend aufgenommen ist, und wobei der Fluidverteiler über seine zweite Rastaufnahme, abhängig von der Drehstellung des Dreh-Befestigungskörpers, entweder in der Dreh-Fixierstellung des Dreh-Befestigungskörpers in oder an dem flexiblen, ersten Rastelement-Teil des Dreh-Befestigungskörpers derart verrastet oder verrastend aufgenommen ist, dass der Fluidverteiler in dem Aufnahmebereich gegen unbeabsichtigtes Herausdrehen und gegen Herausfallen aus dem Aufnahmebereich in einer Vormontage-Stellung fixiert ist, in welcher sowohl eine Ausrichtverschiebung des Fluidverteilers relativ zu dem Dreh-Befestigungskörper und damit relativ zu dem Halterungsgrundkörper als auch ein Wegnehmen des Fluidverteilers von dem Halterungsgrundkörper ermöglicht ist, oder in der Dreh-Verriegelungsstellung in oder an dem starren, zweiten Rastelement-Teil des Dreh-Befestigungskörpers derart verrastet oder verrastend aufgenommen ist, dass der Fluidverteiler in dem Aufnahmebereich in einer Fertigmontage-Stellung verriegelt ist, in welcher der Fluidverteiler nicht ohne Werkzeugeinsatz oder Gewalteinwirkung zumindest in einer Richtung parallel zu einer gedachten, die Drehachse des Dreh-Befestigungskörpers enthaltenden Bewegungsebene aus dem Aufnahmebereich wegnehmbar ist.

Gemäß einer besonders bevorzugten Ausgestaltung kann vorgesehen sein, dass das erste Rastelement den Aufnahmebereich auf einer ersten Seite begrenzt und dass in der Dreh-Fixierstellung des Dreh-Befestigungskörpers der flexible erste Rastelement-Teil den Aufnahmebereich auf einer zweiten Seite begrenzt, die der ersten Seite gegenüber liegt, und dass in der Dreh-Verriegelungsstellung des Dreh-Befestigungskörpers der starre zweite Rastelement-Teil den Aufnahmebereich auf der zweiten Seite begrenzt. Dies ermöglicht eine besonders einfache Konstruktion und eine weiter vereinfachte Montage bzw. Demontage des Fluidverteilers an der Tragstrukturhalterung.

Die Erfindung betrifft auch ein Verfahren zur Montage eines Fluidverteilers, insbesondere eines Wasserverteilers, vorzugsweise eines Heizkreis-Fluidverteilers, an der erfindungsgemäßen Tragstrukturhalterung, wobei der Fluidverteiler ein sich über eine Gehäuselänge erstreckendes Gehäuse umfasst, dessen Außenwandungen wenigstens eine erste Rastaufnahme und wenigstens eine zweite Rastaufnahme aufweisen, die derart angeordnet und ausgebildet sind, dass das erste Rastelement des Aufnahmebereichs der Tragstrukturhalterung in oder an der ersten Rastaufnahme verrastbar oder verrastend aufnehmbar ist und dass das zweite Rastelement des Aufnahmebereichs bzw. des Dreh-Befestigungskörpers der Tragstrukturhalterung in oder an der zweiten Rastaufnahme verrastbar oder verrastend aufnehmbar ist, das die folgenden Verfahrensschritte umfasst:
- Festlegen des Halterungsgrundkörpers mit seiner Tragstrukturanlagefläche an der Tragstruktur;
- Einführen des ersten Rastelements des Aufnahmebereichs des Halterungsgrundkörpers in die erste Rastaufnahme des Fluidverteilers oder umgekehrt;
- Eindrehen des Fluidverteilers in den Aufnahmebereich des Halterungsgrundkörpers, bis der flexible erste Rastelement-Teil des sich in seiner Dreh-Fixierstellung befindlichen Dreh-Befestigungskörpers oder des zuvor in seine Dreh-Fixierstellung überführten Dreh-Befestigungskörpers in oder an der noch freien zweiten Rastaufnahme des Fluidverteilers verrastet ist oder verrastend aufgenommen ist, wobei dann auch das erste Rastelement des Aufnahmebereichs in oder an der ersten Rastaufnahme des Fluidverteilers verrastet ist oder verrastend aufgenommen ist, so dass dann der Fluidverteiler in dem Aufnahmebereich gegen unbeabsichtigtes Herausdrehen und gegen Herausfallen aus dem Aufnahmebereich in einer oder der Vormontage-Stellung fixiert ist, in welcher sowohl eine Ausrichtverschiebung des Fluidverteilers relativ zu dem Dreh-Befestigungskörper und damit relativ zu dem Halterungsgrundkörper als auch ein Wegnehmen bzw. Entfernen des Fluidverteilers von dem Halterungsgrundkörper ermöglicht ist.

Gemäß einem bevorzugten weiteren, vorzugsweise anschließenden, Verfahrensschritt kann vorgesehen sein, dass der Dreh-befestigungskörper um seine Drehachse bis in die Dreh-Verriegelungsstellung gedreht wird, in welcher der starre zweite Rastelement-Teil des Dreh-Befestigungskörpers an oder in der zweiten Rastaufnahme des Fluidverteilers derart verrastet ist oder verrastend aufgenommen ist, dass der Fluidverteiler in dem Aufnahmebereich in einer oder der Fertigmontage-Stellung verriegelt ist, in welcher der Fluidverteiler nicht ohne Werkzeugeinsatz oder Gewalteinwirkung zumindest in einer Richtung parallel zu einer gedachten, die Drehachse des Dreh-Befestigungskörpers enthaltenden Bewegungsebene aus dem Aufnahmebereich wegnehmbar bzw. entfernbar ist.

Gemäß einem ganz besonders bevorzugten alternativen weiteren, vorzugsweise anschließenden, Verfahrensschritt kann vorgesehen sein, dass der Drehbefestigungskörper um seine Drehachse bis in die Dreh-Verriegelungsstellung gedreht wird, in welcher der starre zweite Rastelement-Teil des Dreh-Befestigungskörpers an oder in der zweiten Rastaufnahme des Fluidverteilers verrastet ist oder verrastend aufgenommen ist, und in welcher der starre zweite Rastelement-Teil des Dreh-Befestigungskörpers und/oder wenigstens ein starrer weiterer Rastelement-Teil des Dreh-Befestigungskörpers an oder in einer zweiten Rastaufnahme des Halterungsgrundkörpers oder eines oder des starren Befestigungs- und/ oder Stützkörpers des Halterungsgrundkörpers verrastet ist oder verrastend aufgenommen ist, derart, dass der Fluidverteiler in dem Aufnahmebereich in einer oder der Fertigmontage-Stellung verriegelt ist, in welcher der Fluidverteiler nicht ohne Werkzeugeinsatz oder Gewalteinwirkung zumindest in einer Richtung parallel zu einer gedachten, die Drehachse des Dreh-Befestigungskörpers enthaltenden Bewegungsebene aus dem Aufnahmebereich (32) wegnehmbar bzw. entfernbar ist.

Gemäß einer besonders vorteilhaften Ausgestaltung der jeweiligen Erfindung kann vorgesehen sein, dass die erste Rastaufnahme des Fluidverteilers als eine nach außen offene erste Nut ausgebildet ist und dass die zweite Rastaufnahme des Fluidverteilers als eine nach außen offene zweite Nut ausgebildet ist. Letztere kann sich parallel zu der ersten Nut, vorzugsweise über einen Großteil der Gehäuselänge oder über die gesamte Gehäuselänge des Fluidverteilers, erstrecken. Dies ermöglicht eine noch weiter vereinfachte Montage des Fluidverteilers an der Tragstrukturhalterung sowie eine vorteilhafte Möglichkeit für eine bedarfs- bzw. anwendungsgerechte Ausrichtung des Fluidverteilers relativ zu der Tragstrukturhalterung, insbesondere durch Verschieben des Fluidverteilers relativ zu der Tragstrukturhalterung.

Weitere Merkmale, Vorteile und Gesichtspunkte der Erfindung ergeben sich aus den Ansprüchen und aus dem nachfolgenden Beschreibungsteil, in dem ein vorteilhaftes Ausführungsbeispiel der Erfindung anhand der Figuren beschrieben ist.

Es zeigen:
- Fig. 1: eine perspektivische Vorderseitenansicht einer Tragstrukturhalterung, mit einem Halterungsgrundkörper, der einen Basiskörper und zwei daran befestigte Halterungen umfasst, wobei eine erste, obere Halterung einen ersten, oberen Aufnahmebereich und einen diesem zugeordneten ersten, oberen Dreh-Befestigungskörper aufweist, und wobei eine zweite, untere Halterung einen zweiten, unteren Aufnahmebereich und einen diesem zugeordneten zweiten, unteren Dreh-Befestigungskörper aufweist;
- Fig. 2: eine stark vergrößerte perspektivische Ansicht der Tragstrukturhalterung gemäß Fig. 1, im Bereich des sich in einer Dreh-Fixierstellung befindlichen ersten, oberen Dreh-Befestigungskörpers;
- Fig. 3: eine stark vergrößerte perspektivische Ansicht der Tragstrukturhalterung gemäß Fig. 1, im Bereich des sich in einer Dreh-Verriegelungsstellung befindlichen zweiten, unteren Dreh-Befestigungskörpers;
- Fig. 4: einen Ausschnitt der Tragstrukturhalterung gemäß Fig. 1 im Bereich der zweiten, unteren Halterung, in einer perspektivischen Vorderseitenansicht von rechts;
- Fig. 5: einen Längsquerschnitt der Tragstrukturhalterung gemäß Fig. 1 im Bereich der ersten, oberen Halterung;
- Fig. 6: einen vergrößerten Querschnitt der Tragstrukturhalterung im Bereich des ersten, oberen Dreh-Befestigungskörpers, entlang der Schnittlinien 6-6 in Fig. 4;
- Fig. 7: eine perspektivische Vorderseitenansicht eines Ausschnitts der ersten, oberen Halterung der Tragstrukturhalterung gemäß Fig. 1, in einer Explosionsdarstellung, bei welcher der erste, obere Dreh-Befestigungskörper noch nicht an der ersten, oberen Halterung montiert ist;

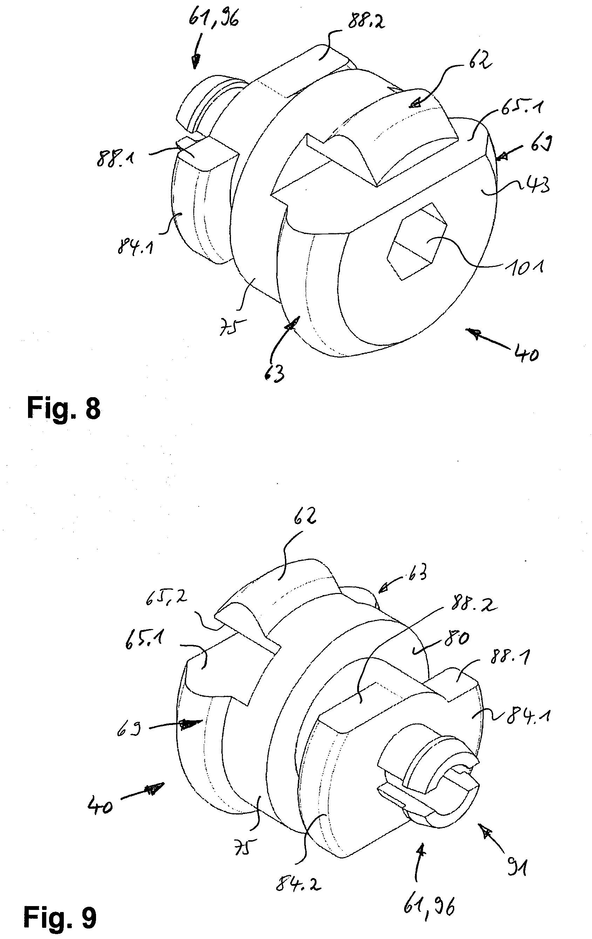

- Fig. 8: eine perspektivische Vorderseitenansicht eines Drehbefestigungskörpers der beiden gleich gestalteten Dreh-Befestigungskörper;
- Fig. 9: den Dreh-Befestigungskörper gemäß Fig. 7 in einer perspektivischen Rückseitenansicht;

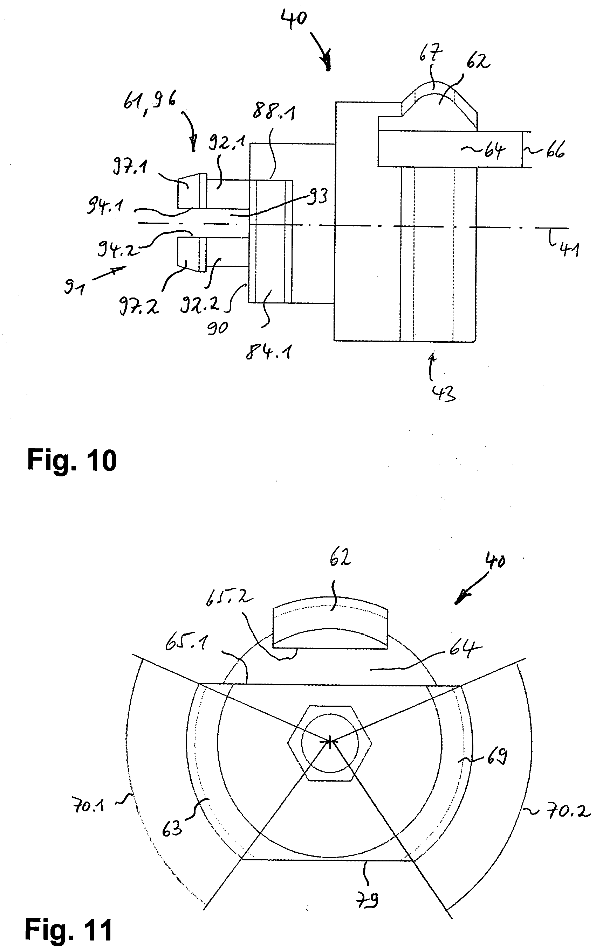

- Fig. 10: den Dreh-Befestigungskörper gemäß Fig. 7 in einer Seitenansicht von links;
- Fig. 11: den Dreh-Befestigungskörper gemäß Fig. 7 in einer Ansicht mit Blick auf dessen Betätigungsende;

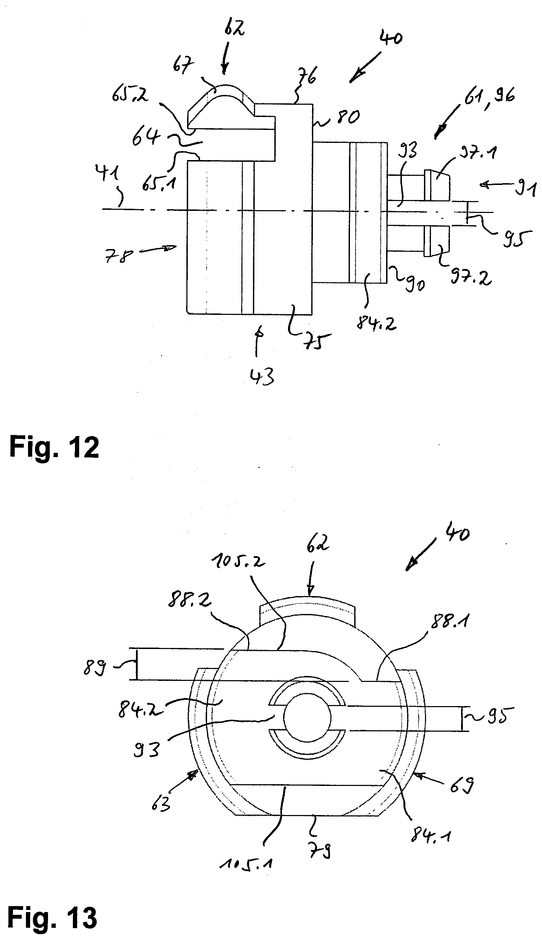

- Fig. 12: den Dreh-Befestigungskörper gemäß Fig. 7 in einer Seitenansicht von rechts;
- Fig. 13: den Dreh-Befestigungskörper gemäß Fig. 7 in einer Ansicht mit Blick auf dessen Befestigungsende;
- Fig. 14: einen ersten Längsschnitt des Dreh-Befestigungskörpers gemäß Fig. 7;
- Fig. 15: einen zweiten Längsschnitt des Dreh-Befestigungskörpers gemäß Fig. 7, der gegenüber dem ersten Längsschnitt gemäß Fig. 14 um 90 Grad um die Drehachse des Dreh-Befestigungskörpers gedreht gezeichnet ist;

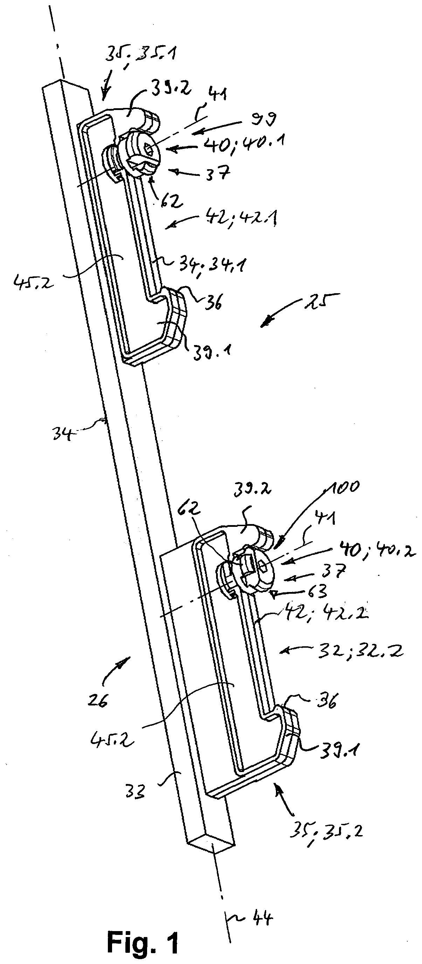

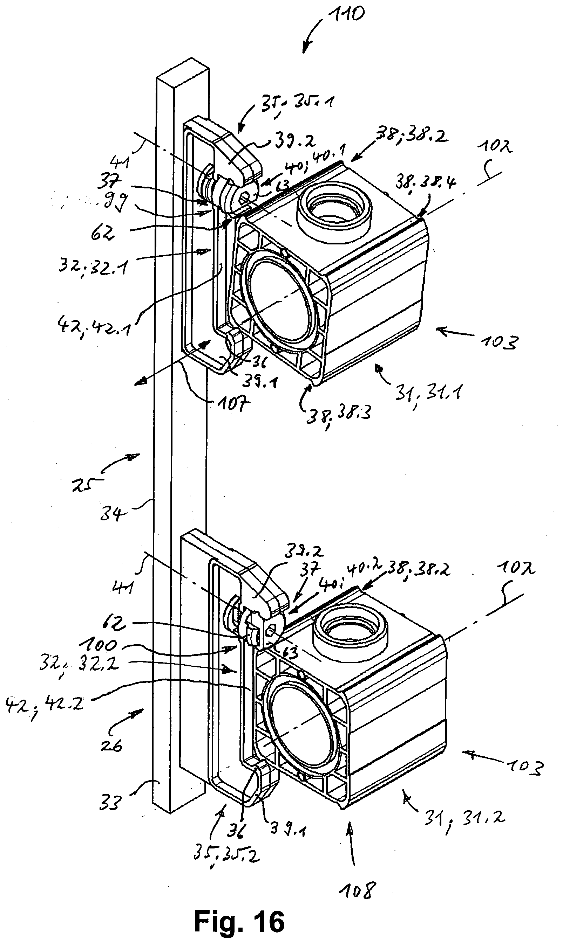

- Fig. 16: eine Montageanordnung umfassend die Tragstrukturhalterung gemäß Fig. 1 und umfassend zwei daran lösbar befestigte Fluidverteiler, wobei ein oberer Fluidverteiler in einer Einbau-Zwischenstellung gezeigt ist, in welcher er durch Eindrehen in Richtung des ersten, oberen Aufnahmebereichs in eine Vormontagestellung überführbar ist, und wobei ein unterer Fluidverteiler in einer Fertigmontagestellung gezeigt ist, in welcher er mittels des sich in seiner Dreh-Verriegelungsstellung befindlichen zweiten, unteren Dreh-Befestigungskörpers gegenüber dem Halterungsgrundkörper gegen Ausheben arretiert ist;
- Fig. 17: die Montageanordnung gemäß Fig. 15 in einer Seitenansicht von links;
- Fig. 18: eine vergrößerte Ansicht der Montageanordnung gemäß Fig. 17 im Bereich des sich in seiner Dreh-Fixierstellung befindlichen ersten, oberen Dreh-Befestigungskörpers, an dessen ersten flexiblen Rastelement-Teil der erste, obere Fluidverteiler mit einer Außenwand im Bereich einer Ecke seiner Ecken anliegt;
- Fig. 19: eine vergrößerte Ansicht der Montageanordnung gemäß Fig. 17 im Bereich des sich in seiner Dreh-Verriegelungsstellung befindlichen zweiten, unteren Dreh-Befestigungskörpers, dessen starrer zweiter Rastelement-Teil in einer als Nut gestalteten Rastaufnahme des zweiten, unteren Fluidverteilers verrastet ist;
- Fig. 20: der in Fig. 18 gezeigte Bereich der Montageanordnung in einer Ansicht von rechts;
- Fig. 21: der in Fig. 19 gezeigte Bereich der Montageanordnung in einer Ansicht von rechts.

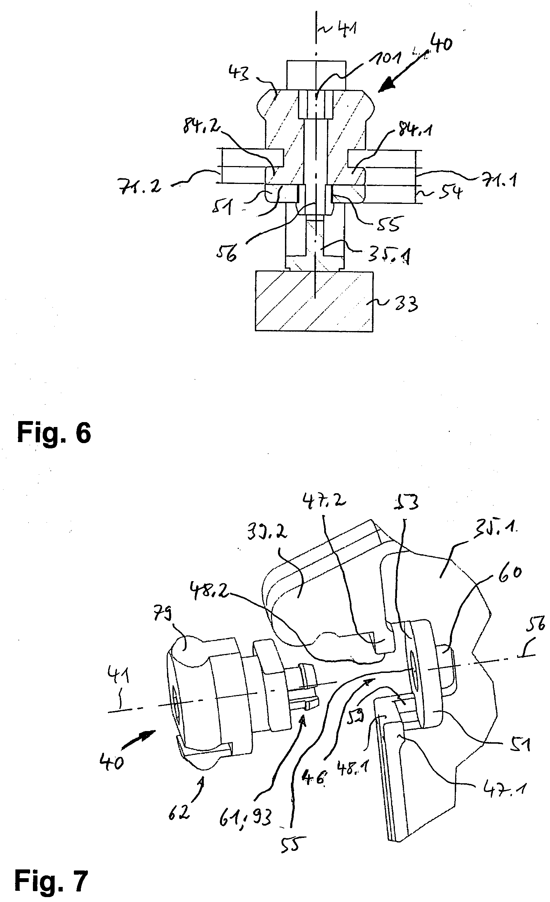

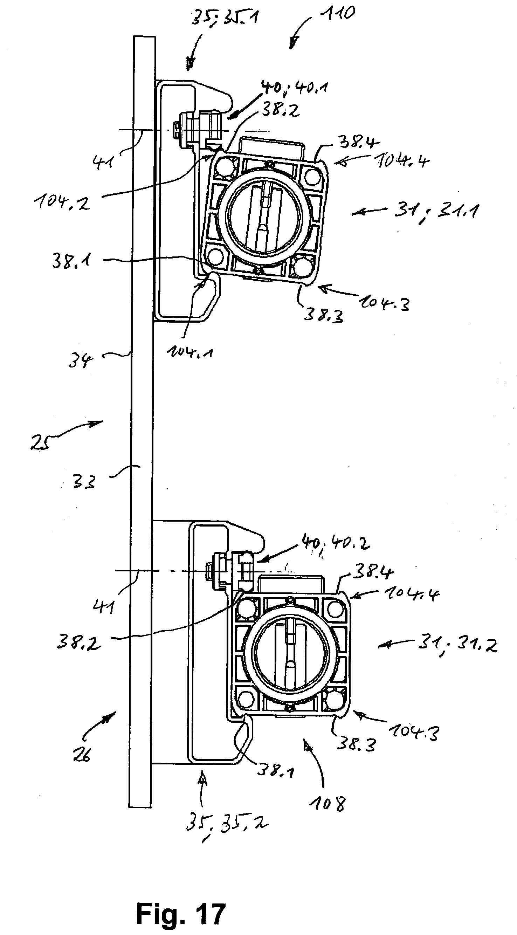

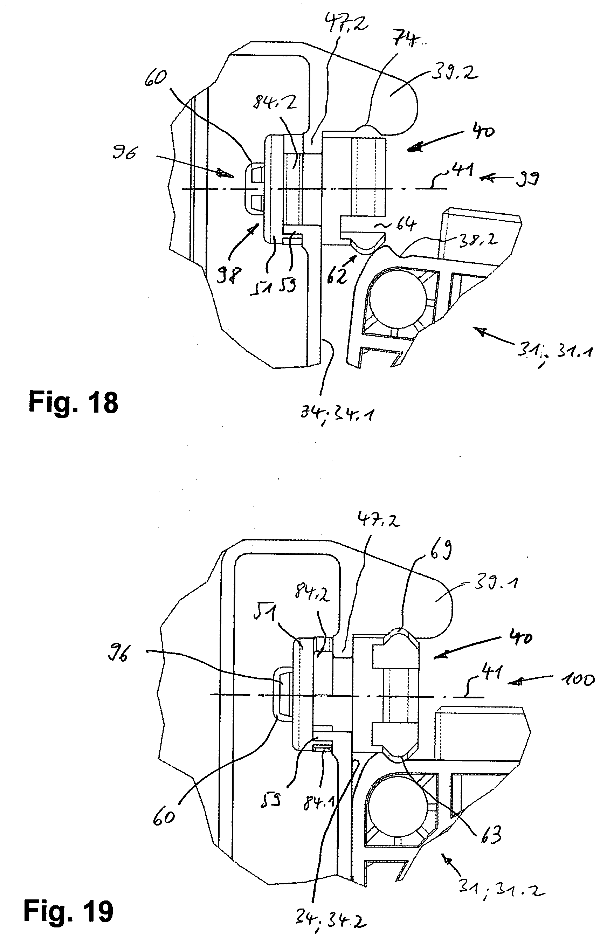

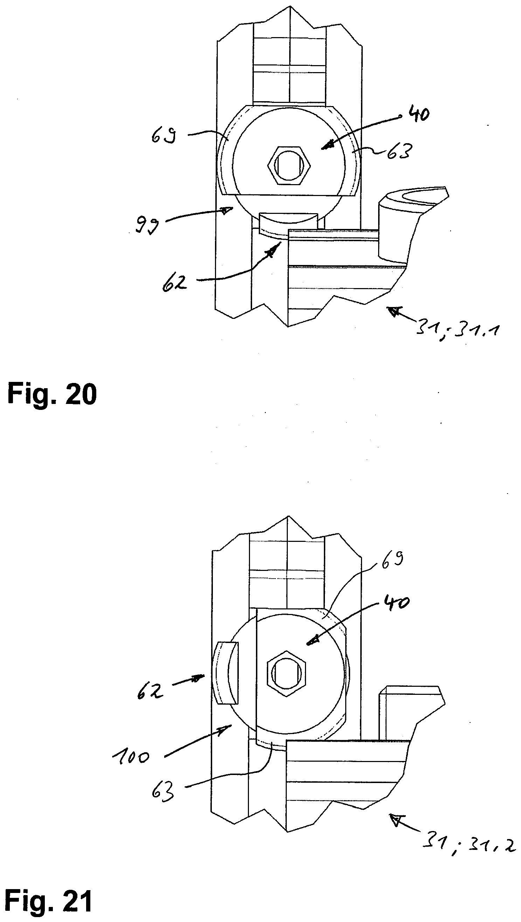

Bei der in den Figuren 1-7 und 16-21 gezeigten Tragstrukturhalterung 25, die auch mit Halter bezeichnet ist, handelt es sich um eine Wandhalterung für zwei Fluidverteiler 31; 31.1, 31.2 , die in den Figuren 16 und 17 gezeigt sind. Dabei handelt es sich konkret um Wasserverteiler, die bevorzugt als Heizkreisverteiler einsetzbar sind bzw. werden. Ein Satz Halter 30 umfasst zwei Halterungsgrundkörper 26 mit jeweils zwei Aufnahmebereichen 32.1, 32.2 für jeweils einen der Fluidverteiler 31. Der Halterungsgrundkörper 26 umfasst einen Basiskörper 33 zum Befestigen des Halterungsgrundkörpers 26 an einer geeigneten, auch als Tragstruktur bezeichneten, nicht gezeigten Wand. Der Basiskörper 33 der Tragstrukturhalterung hat eine auch als Tragstrukturanlagefläche bezeichnete Wandanlagefläche 34 zur Anlage an der nicht gezeigten Tragstruktur bzw. Wand. Der Basiskörper ist bevorzugt langgestreckt, insbesondere als eine Leiste 33, gestaltet. Es versteht sich jedoch, dass der Basiskörper auch anders gestaltet sein kann. An dem Basiskörper 33 sind zwei Halterungen 35; 35.1, 35.2 lösbar oder unlösbar befestigt, wobei eine erste, obere Halterung 35.1 und eine zweite, untere Halterung 35.2 vorgesehen sind. Die zweite, untere Halterung 35.2 unterscheidet sich von der ersten, oberen Halterung 35.1 ausschließlich dadurch, dass sie einen Abstandskörper enthält. Der Abstandskörper grenzt unmittelbar an die Leiste 33 bzw. an den Basiskörper an. Aufgrund des Abstandskörpers ragt die zweite, untere Halterung 35.2 entsprechend weiter über die Leiste bzw. den Basiskörper 33 nach vorne heraus als die obere, erste Halterung 35.1. Der Basiskörper 33 und die jeweilige Halterung 35; 35.1, 35.2 können bevorzugt aus einem thermoplastischen Kunststoff bestehen. Sie können kostengünstig im Spritzgießverfahren hergestellt sein. Es kann auch vorteilhaft sein, den Basiskörper 33 und die jeweilige Halterung 35; 35.1, 35.2 aus einem Stück bzw. einstückig herzustellen, insbesondere durch Spritzgießen. Der Halterungsgrundkörper 26 bzw. dessen Basiskörper 33 kann mittels nicht gezeigter Befestigungsmittel, beispielsweise Schrauben, die zu diesem Zwecke durch nicht gezeigte Durchgangslöcher des Basiskörpers 33 gesteckt werden können, an der nicht gezeigten Tragstruktur bzw. Wand befestigt werden, und zwar derart, dass die Tragstruktur- bzw. Wandanlagefläche 34 des Basiskörpers 33 an der nicht gezeigten Tragstruktur bzw. Wand anliegt.

Jede Halterung 35, die auch mit Träger bezeichenbar ist, hat einen Aufnahmebereich 32; 32.1, 32.2 für einen Fluidverteiler 31. Jeder Aufnahmebereich 32 umfasst ein erstes, unteres Rastelement 36 und ein zweites, oberes Rastelement 37. Das erste, untere Rastelement 36 ist mit einer passenden ersten Rastaufnahme 38.1 des Fluidverteilers 31 in Eingriff bringbar und das zweite, obere Rastelement 37 ist mit einer passenden zweiten Rastaufnahme 38.2 des Fluidverteilers in Eingriff bringbar. Jeder Aufnahmebereich 32.1, 32.2 hat eine Anlagefläche 42; 42.2, 42.2 für den jeweiligen Fluidverteiler 31; 31.1, 31.2 Das erste, untere Rastelement 36 ist Bestandteil einer ersten, unteren, auch als Befestigungs- und/oder Stützkörper bezeichneten Stütznase 39.1 der Halterung 35. Das zweite, obere Rastelement 37 ist Bestandteil eines Dreh-Befestigungskörpers 40, der zum lösbaren Befestigen eines Fluidverteilers 31 in dem Aufnahmebereich 32 an dem Halterungsgrundkörper 26 dient. Der Dreh-Befestigungskörper 40 ist um eine Drehachse 41 relativ zu der Halterung 35 drehbar, und zwar von einer ersten Drehstellung bzw. Dreh-Fixierstellung 99 in eine zweite Drehstellung bzw. Dreh-Verriegelungsstellung 100. Die Drehachse 41 verläuft senkrecht zu einer Anlagefläche 42 des Aufnahmebereichs 32 für den Fluidverteiler. Der Dreh-Befestigungskörper 40 ist lösbar an der Halterung 35 befestigt. Der Dreh-Befestigungskörper 40 weist einen Befestigungs- bzw. Betätigungskopf 43 auf. Der Befestigungs- bzw. Betätigungskopf 43 ist zwischen der ersten, unteren Stütznase 39.1 der Halterung 35 und einer zweiten, oberen, auch als Befestigungs- und/oder Stützkörper bezeichneten Stütznase 39.1 der Halterung 35, angrenzend an die zweite, obere Stütznase 39.2 angeordnet. Die Stütznasen 39.1, 39.2 erstrecken sich jeweils über die den Aufnahmebereich 32 zu dem Basiskörper 33 hin begrenzenden Anlagefläche 42 für den Fluidverteiler 31 hinaus in eine Richtung von dem Basiskörper 33 weg, hier nach vorne. Vorzugsweise erstreckt sich die Anlagefläche 42 des Aufnahmebereichs 32 parallel zu dem Basiskörper 33 bzw. zu dessen Längsachse 44. Die erste, untere Stütznase 39.1 begrenzt den Aufnahmebereich 32 nach unten.

Jede Halterung 35 umfasst eine zu der Anlagefläche 42 ihres Aufnahmebereichs 32 hin offene und auch zu den beiden voneinander weg weisenden Längsseiten 45.1, 45.2 der Halterung 35 offene Aufnahmeöffnung 46 auf, in welcher der Dreh-Befestigungskörper 40 aufgenommen ist. Die Aufnahmeöffnung 46 ist von zwei sich gegenüber liegenden Fixierschenkeln 47.1, 47.2 der Halterung 35 begrenzt, die sich senkrecht zu der Drehachse 41 des Dreh-Befestigungskörpers 40 in die Aufnahmeöffnung 46 erstrecken. Die freien Enden 48.1, 48.2 der Fixierschenkel 47.1, 47.2 weisen einen Fixierschenkel-Abstand 49 zueinander auf. Der erste, untere Fixierschenkel 47.1 ist mit einer Außenfläche begrenzt, die mit der Anlagefläche 42 des Aufnahmebereichs 32 fluchtet und parallel zu dieser verläuft. Der erste, untere Fixierschenkel 47.1 ist einstückiger Bestandteil eines mit der Anlagefläche 42 begrenzten Anlagewandteils der Halterung 35. Auch der zweite, obere Fixierschenkel 47.2 ist mit einer Außenfläche begrenzt, die mit der Anlagefläche 42 des Aufnahmebereichs 32 fluchtet und parallel zu dieser verläuft. Der erste und der zweite Fixierschenkel 47.1, 47.2 weisen jeweils eine Fixierschenkel-Dicke 50.1, 50.2 auf, die gleich groß ist.

Die Aufnahmeöffnung 46 ist von einer scheibenförmigen Lagerplatte 51 durchsetzt, die in Richtung zu dem Basiskörper 33 hin betrachtet in einem Abstand 52 zu den Fixierschenkeln 47.1, 47.2 angeordnet ist. Die Lagerplatte 51 ist ebenfalls einstückig mit der Halterung 35 verbunden. Die Lagerplatte 51 weist eine plane Lagerfläche 53 zur Lagerung und Abstützung des Dreh-Befestigungskörpers 40 auf. Die Lagerfläche 53 ist auf der von dem Basiskörper 33 weg weisenden Seite der Lagerplatte 51 angeordnet und parallel zu der Anlagefläche 42 des Aufnahmebereichs 32 der Halterung 35 ausgebildet. Die Lagerplatte 51 weist eine Lagerplatten-Dicke 54 auf. Die Lagerplatte 51 hat eine kreiszylindrische Durchgangsöffnung 55, deren Öffnungsachse 56 mit der Drehachse 41 des Dreh-Befestigungskörpers 40 fluchtet. Zwischen der Lagerfläche 53 der Lagerplatte 51 und den dieser gegenüber liegenden Begrenzungsflächen der beiden Fixierschenkel 47.1, 47.2 ist jeweils eine Nut 57.1, 57.2 ausgebildet. Die jeweilige Nut 57.1, 57.2 weist eine Nutbreite 58.1, 58.2 auf, die gleich groß ist. Die zwischen dem ersten, unteren Fixierschenkel 47.1 und der Lagerplatte 51 ausgebildete erste, untere Nut 57.1 ist auf einer ihrer Nutseiten von einem Anschlagsteg 59 begrenzt. Der Anschlagsteg 59 erstreckt sich von dem ersten, unteren Fixierschenkel 47.1 bis zu der Lagerfläche 53 der Lagerplatte 51 parallel zu der Öffnungsachse 56 der Durchgangsöffnung 55 bzw. parallel zu der Drehachse 41 des Dreh-Befestigungskörpers 40. Im Unterschied dazu ist die zwischen dem zweiten, oberen Fixierschenkel 47.2 und der Lagerplatte 51 ausgebildete zweite, obere Nut 57.2 nur von einem Wandteil der der zweiten, oberen Stütznase 39.2 begrenzt. Die Aufnahmeöffnung 46 umfasst einen Öffnungsteil 60, der auf der von der Lagerfläche 53 der Lagerplatte 51 weg weisenden Seite der Lagerplatte 51 ausgebildet ist und der zur Aufnahme eines Befestigungskörpers 61, vorzugsweise in Form eines Schnappelements 96, des Dreh-Befestigungskörpers 40 zum lösbaren Befestigen des Dreh-Befestigungskörpers 40 an der Halterung 35 dient.

Der Dreh-Befestigungskörper (40) bzw. dessen Dreh-Befestigungskopf 43 umfasst das zweite, obere Rastelement 37 des Aufnahmebereichs 32. Das zweite, obere Rastelement 37 bzw. der Dreh-Befestigungskörper (40) bzw. umfasst einen flexiblen, ersten Rastelement-Teil 62 bzw. ein flexibles, erstes Rastelement und einen starren, zweiten Rastelement-Teil 63 bzw. ein starres, zweites Rastelement. Der flexible, erste Rastelement-Teil 62 ist als ein Schnapp-Haken ausgebildet. Der Schnapp-Haken 62 ist durch einen parallel zu der Drehachse 41 des Dreh-Befestigungskörpers 40 und in einem Abstand zu der Drehachse 41 verlaufenden Schlitz 64 von dem übrigen Teil des Befestigungs- bzw. Betätigungskopfes 43 des Dreh-Betätigungskörpers 40 abgeteilt. Der Schlitz 64 ist mit parallelen Schlitzflächen 65.1, 65.2 begrenzt, die in einem der Schlitzbreite entsprechenden Abstand 66 parallel zueinander und parallel zu der Drehachse 41 angeordnet sind. Der Schnapp-Haken 62 kann elastisch insbesondere in Richtung zu der Drehachse 41 des Dreh-Befestigungskörpers 40 hin ausgelenkt werden. Das freie Hakenende 67 des Schnapphakens 62 hat in einem die Drehachse 41 enthaltenen Längsschnitt des Dreh-Befestigungskörpers 40 betrachtet einen V- oder U-förmigen Querschnitt 72 und ist konvex, also nach außen gewölbt gestaltet. Das diesen Querschnitt 72 aufweisende freie Hakenende 67 des Schnapphakens 62 ist Bestandteil des flexibles Rastelements 62. Es erstreckt sich in radialer Richtung über eine kreiszylindrische Außenoberfläche 76 eines Stütz- und Lagerteils 75 des Dreh-Befestigungskörpers 40 hinaus quer von der Drehachse 41 weg nach außen. Auch das erste, untere Rastelement 36 des Aufnahmebereichs 32 hat in einem die Drehachse 41 des Dreh-Befestigungskörpers 40 enthaltenen Längsschnitt des Dreh-Befestigungskörpers 40 betrachtet einen V- oder U-förmigen Querschnitt 77 und ist konvex, also nach außen gewölbt gestaltet.

Der Befestigungs- bzw. Betätigungskopf 43 des Dreh-Befestigungskörpers 40 umfasst auch einen starren, zweiten Rastelement-Teil 63 bzw. ein starres zweites Rastelement des zweiten, oberen Rastelements 37 des Aufnahmebereichs 32.

Der Befestigungs- bzw. Betätigungskopf 43 des Dreh-Befestigungskörpers 49 weist außerdem ein starres, erstes Rastelement 69 auf. Vorzugsweise ist das starre, zweite Rastelement 63 gleich gestaltet wie das starre, erste Rastelement 69 des Dreh-Befestigungskörpers 40. Das starre, erste Rastelement 69 und das starre, zweite Rastelement 63 erstrecken sich jeweils um einen, vorzugsweise gleich großen, Umfangswinkel 70.1, 70.2 um die Drehachse 41 des Dreh-Befestigungskörpers 40. Der jeweilige Umfangswinkel beträgt in dem gezeigten Ausführungsbeispiel etwa 75 Grad. Die Außenkontur des starren, ersten Rastelements 69 und die Außenkontur des starren, zweiten Rastelements 63 sind in einem Querschnitt senkrecht zu der Drehachse 41 des Dreh-Befestigungskörpers 40 betrachtet jeweils teilkreisförmig gestaltet. Die jeweilige teilkreisförmige Außenkontur liegt auf einem gedachten Kreis, dessen Kreismittelpunkt mit der Drehachse 41 zusammenfällt. Die Außenkontur eines oder jedes der besagten beiden starren Rastelemente 63, 69 kann jedoch auch anders gestaltet sein. Beispielsweise kann die Außenkontur eines oder jedes der besagten beiden starren Rastelemente exzentrisch zu der Drehachse ausgebildet sein, und zwar derart, dass es bei einer Drehung des Dreh-Befestigungskörpers um seine Drehachse von der ersten Drehstellung bzw. Dreh-Fixierstellung 99 in die zweite Drehstellung bzw. Dreh-Verriegelungsstellung 100 zu einem, ggf. zusätzlichen, Festklemmen des Fluidverteilers 31 zwischen dem starren, zweiten, oberen Rastelement 63 des Dreh-Befestigungsköpers 40 und dem starren, ersten, unteren Rastelement 36 des Aufnahmebereichs kommen kann, vorzugsweise so dass der Fluidverteiler 31 nicht relativ zu dem Aufnahmebereich bewegbar ist bzw. unbeweglich mit der Halterung 35 bzw. mit dem Halterungsgrundkörper 26 verbunden ist. Das starre, erste Rastelement 69 und das starre zweite Rastelement 63 und auch das flexible Rastelement 62 des Dreh-Befestigungskörpers 40 sind in einer gedachten gemeinsamen Ebene angeordnet, die normal zu der Drehachse 41 ausgebildet ist. Das starre, erste Rastelement 69 und das starre, zweite Rastelement 63 weisen jeweils in einem die Drehachse 41 enthaltenen Längsschnitt des Dreh-Befestigungskörpers 40 betrachtet ebenfalls einen V- oder U-förmigen Querschnitt 72, 73 auf und sind konvex, also nach außen gewölbt gestaltet. Das starre, erste Rastelement 69 und das starre, zweite Rastelement 63 erstrecken sich radial über die Außenoberfläche 76 des kreiszylindrischen Stütz- und Lagerteils 75 des Dreh-Befestigungskörpers 40 hinaus quer zu der Drehachse 41 radial nach außen. Sowohl das mit dem freien Hakenende 67 des Schnapphakens 62 ausgebildete flexible, erste Rastelement 62 des Dreh-Befestigungskörpers 40, als auch das starre, erste Rastelement 69 des Dreh-Befestigungskörpers 40 und das starre, zweite Rastelement 63 des Dreh-Befestigungskörpers 40 sind an dem Betätigungsende 78 des Dreh-Befestigungskörpers 40 angeordnet. Das starre, erste Rastelement 69 und das starre, zweite Rastelement 63 sind in Umfangsrichtung um die Drehachse 41 betrachtet durch eine erste Abflachung 79 durch und eine zweite Abflachung 65.1 begrenzt, deren plane Flächen parallel zu der Drehachse 41 verlaufen.

Der Stütz- und Lagerteil 75 des Dreh-Befestigungskörpers 40 ist in Richtung von dem Betätigungsende 78 des Dreh-Befestigungskörper 40 weg bzw. in Richtung zu dem Befestigungsende 91 des Dreh-Befestigungskörpers 40 hin durch eine senkrecht zu der Drehachse 41 verlaufende Lager-Ringfläche 80 begrenzt. Die Lager-Ringfläche 80 ist radial in Richtung zu der Drehachse 41 hin durch einen kreiszylindrischen Abschnitt 81 des Dreh-Befestigungskörpers 40 begrenzt und dazu senkrecht ausgebildet. Der Abschnitt 81 weist einen Außendurchmesser 82 auf, der kleiner ist als der Außendurchmesser 83 des Stütz- und Lagerteils 75 des Dreh-Befestigungskörpers 40. Der Außendurchmesser 82 des besagten Abschnitts 81 ist geringfügig kleiner als der Fixierschenkel-Abstand 49 zwischen den freien Enden 48.1, 48.2 der beiden Fixierschenkel 47.1, 47.2 der Halterung 35. In einem der Fixierschenkel-Dicke 50.1, 50.2 der Fixierschenkel 47.1, 47.2 entsprechenden axialen Abstand von der besagten Lager-Ringfläche 80 in Richtung zu dem Befestigungsende 91 des Dreh-Befestigungskörpers 40 hin versetzt, sind zwei Sicherungsschenkel 84.1, 84.2 der Halterung 35 angeordnet. Die Sicherungsschenkel 84.1, 84.2 erstrecken sich senkrecht zu der Drehachse 41 und mit ihren freien Enden 87.1, 87.2 von der Drehachse 41 sowie in entgegengesetzte Richtungen voneinander weg nach außen. Zwischen jedem Sicherungsschenkel 84.1, 84.2 und der besagten axialen Lager-Ringfläche 80 des Stütz- und Lagerteils 75 des Dreh-Befestigungskörpers 40 ist jeweils eine radial nach außen offene Nut 85.1, 85.2 ausgebildet. Deren jeweilige Nutbreite 86.1, 86.2 entspricht etwa der jeweiligen Sicherungsschenkel-Dicke 71.1, 71.2 der Sicherungsschenkel 84.1, 84.2.

Die freien Enden 87.1, 87.2 der beiden Sicherungsschenkel 84.1, 84.2 weisen jeweils eine kreiszylindrische Außenumfangsfläche auf. In einem Querschnitt senkrecht zu der Drehachse 41 des Dreh-Befestigungskörpers 40 betrachtet, weisen die freien Enden 87.1, 87.2 der Sicherungsschenkel 84.1, 84.2 jeweils eine teilkreisförmige Außenkontur auf. Ein erster Sicherungsschenkel 84.1 der beiden Sicherungsschenkel 84.1, 84.2 ist mit einer abgesetzten ersten Anschlagfläche 88.1 versehen, die parallel zu der Drehachse 41 ausgebildet ist. Ein zweiter Sicherungsschenkel 84.2 der beiden Sicherungsschenkel 84.1, 84.2 ist mit einer nicht abgesetzten zweiten Anschlagfläche 88.2 versehen, die ebenfalls parallel zu der Drehachse 41 ausgebildet ist. Die zweite Anschlagfläche 88.2 ist in einem Querabstand 89 zu der ersten Anschlagfläche 88.1 angeordnet. Die beiden Sicherungsschenkel 84.1, 84.2 sind, in Richtung zu dem Befestigungsende 91 des Dreh-Befestigungskörpers 40 hin betrachtet, durch eine gemeinsame, plane Stütz- und Lagerfläche 90 begrenzt, die normal zu der Drehachse 41 ausgebildet ist. Die Stütz- und Lagerfläche 90 dient zur Abstützung und Lagerung des Dreh-Befestigungskörpers 40 an der gegenüberliegenden planen Lagerfläche 53 der scheibenförmigen Lagerplatte 51 der Halterung 35 des Halterungsgrundkörpers 26. Die Stütz- und Lagerfläche 90 der Sicherungsschenkel 84.1, 84.2 und Lagerfläche 53 der Lagerplatte 51 erstrecken sich parallel zu der Anlagefläche 42 für den Fluidverteiler 31. Der Dreh-Befestigungskörper 40 hat an seinem Befestigungsende 91 zwei Schnapphaken 92.1, 92.2, die durch einen parallel zu der Drehachse 41 verlaufenden Schlitz 93 voneinander getrennt sind. Dessen parallele Schlitzflächen 94.1, 94.2 sind in einem der Schlitzbreite entsprechenden Abstand 95 zueinander jeweils in einem gleichen Abstand zu der Drehachse 41 angeordnet. Die beiden Schnapphaken 92.1, 92.2 bilden gemeinsam ein Schnappelement 96 aus, das auch mit Befestigungskörper 61 bezeichnet ist. Das Schnappelement 96 ist im an der Halterung 35 montierten Zustand des Dreh-Befestigungskörpers 40 durch die Durchgangsöffnung 55 der Lagerplatte 51 der Halterung 35 hindurch gesteckt und mittels die Lagerplatte 51 hintergreifenden Hakenteilen 97.1, 97.2 der beiden Schnapphaken 92.1, 92.2 unter Ausbildung einer lösbaren Schnappverbindung 98 verrastet.

Der Dreh-Befestigungskörper 40 kann bevorzugt einteilig und aus einem thermoplastischen Kunststoff hergestellt sein, vorzugsweise im Spritzgießverfahren. Besonders bevorzugt können die Halterung 35, der Basiskörper 33 und der Dreh-Befestigungskörper 40 aus dem gleichen Kunststoff hergestellt sein.

Jeder Dreh-Befestigungskörper 40 kann von der ersten Drehstellung bzw. Dreh-Fixierstellung 99 um seine Drehachse 41 relativ zu der jeweiligen Halterung 35 bzw. relativ zu dem Halterungsgrundkörper 26 in die zweite Drehstellung bzw. Dreh-Verriegelungsstellung 100 gedreht werden, und umgekehrt. In der Dreh-Fixierstellung 99 weist der als Schnapp-haken 62 gestaltete, flexible, erste Rastelement-Teil des Dreh-Befestigungskörpers 40 in Richtung zu dem starren, ersten, unteren Rastelement 36 und liegt diesem gegenüber. In der Dreh-Fixierstellung 99 des Dreh-Befestigungskörpers 40 wird also der Aufnahmebereich 32 nicht nur durch das starre, erste, untere Rastelement 36 und durch die Anlagefläche 42 für den Fluidverteiler 31 begrenzt, sondern auch durch den flexiblen, ersten, oberen Rastelement-Teil 62 bzw. den besagten Schnapphaken. In der Dreh-Fixierstellung 99 des Dreh-Befestigungskörpers 40 kann der Fluidverteiler 31 montiert werden, wie in den Figuren 16, 17, 18 und 20 jeweils am Beispiel des ersten, oberen Fluidverteilers 31.1 veranschaulicht. Der Dreh-Befestigungskörper 40 kann über seine Dreh-Fixierstellung 99 hinaus nicht in einer Drehrichtung entgegen dem Uhrzeigersinn gedreht werden. Dies ist dadurch verhindert, dass der Dreh-Befestigungskörper 40 mit der nicht abgesetzten, zweiten Anschlagfläche 88.2 des zweiten Sicherungsschenkels 84.2 an einer zweiten Anschlagfläche 109.2 des Anschlagstegs 59 der Halterung 35 anschlägt. Der Dreh-Befestigungskörper 40 kann ausgehend von der Dreh-Fixierstellung 99 im Uhrzeigersinn bis in seine Dreh-Verriegelungsstellung 100 um die Drehachse 41 gedreht werden, hier um etwa 90 Grad. Ein Weiterdrehen im Uhrzeigersinn ist durch ein Anschlagen der abgesetzten, ersten Anschlagfläche 88.1 des ersten Sicherungsschenkels 84.1 an einer ersten Anschlagfläche 109.1 des Anschlagstegs 59 der Halterung 35 verhindert.

Um eine Drehung den Drehbefestigungs-Körpers 40 von seiner Dreh-Fixierstellung 99 in seine Dreh-Verriegelungsstellung 100, und umgekehrt, um die Drehachse 41 zu erleichtern, hat der Dreh-Befestigungskörper 40 an seinem Betätigungsende 78 eine Werkzeugaufnahme 101, an welcher ein geeignetes Werkzeug angreifen kann. Bei dem in den Figuren gezeigten Dreh-Befestigungskörper 40 ist als Werkzeugaufnahme ein Innensechskant 101 vorgesehen. Dessen Sechskantöffnung ist zu dem Betätigungsende 78 des Dreh-Befestigungskörpers 40 hin offen, so dass dort beispielsweise ein nicht gezeigter Inbusschlüssel als Werkzeug einsteckbar ist. Es versteht sich, dass auch anders gestaltete Werkzeugaufnahmen für passende andere Werkzeuge denkbar sind, beispielsweise ein Schlitz für einen Schraubendreher.

Jeder Fluidverteiler 31; 31.1, 31.2 weist ein, vorzugsweise längliches, sich über eine Gehäuselänge in einer Axialrichtung 102 erstreckendes quaderförmiges Gehäuse 103 auf. Die Außenwandungen des Fluidverteilers 31 bzw. seines Gehäuses 103 weisen im Bereich seiner Längskanten bzw. Ecken 104.1, 104.2, 104.3, 104.4 mindestens zwei, vorzugsweise vier, auch als Rastaufnahmen bezeichnete Axial- bzw. Längsnuten 38.1, 38.2, 38.3, 38.4 auf. Diese erstecken sich parallel zueinander in der Axialrichtung 102. Mindestens zwei der Axial- bzw. Längsnuten 38.1, 38.2; 38.3, 38.4, vorzugsweise jeweils zwei Axial- bzw. Längsnuten 38.1, 38.2; 38.3, 38.4 der vier Axial- bzw. Längsnuten 38.1, 38.2, 38.3, 38.4 sind zu voneinander weg weisenden Seiten der Außenwandungen des Fluidverteilers 31 bzw. seines Gehäuses 103 hin offen.

Das erste, untere Rastelement 36 des Aufnahmebereichs und das zweite, obere Rastelements 37 des Dreh-Befestigungskörpers 40, und damit sowohl des flexiblen, ersten Rastelements 62 als auch des starren, zweiten Rastelements 62 des Dreh-Befestigungskörpers 40, sind auf die Anordnung und Gestaltung der Axial- bzw. Längsnuten 38.1, 38.2, 38.3, 38.4 des Fluidverteilers 31 derart abgestimmt angeordnet und gestaltet, dass sie darin jeweils verrastend aufnehmbar sind. Demgemäß entspricht die Innenkontur der Rastaufnahmen bzw. Längsnuten 38.1, 38.2, 38.3, 38.4 des Fluidverteilers 31 der Außenkontur des ersten, unteren Rastelements 36 und auch der Außenkontur des flexiblen Rastelements 62 des Dreh-Befestigungskörpers und außerdem auch der Außenkontur des starren, zweiten Rastelements 63 des Dreh-Befestigungskörpers 40.

In der Dreh-Fixierstellung 99 des Dreh-Befestigungskörpers 40 sind dessen seitliche, voneinander weg weisende, die beiden Sicherungsschenkel 84.1, 84.2 begrenzende Abflachungungen in 105.1, 105.2 in einem geringen Abstand zu den freien Enden 48.1, 48.2 der Fixierschenkel 47.1, 47.2 der Halterung 35 angeordnet und auch die im Bereich des Betätigungsendes 91 des Befestigungs- bzw. Betätigungskopfes des Dreh-Befestigungskörpers 40 vorgesehene erste Abflachung 79 ist in einem seitlichen Abstand zu der gegenüber liegenden zweiten, oberen Stütznase 39.2 der Halterung 35 angeordnet, so dass der Dreh-Befestigungskörper 40 in der Dreh-Fixierstellung 99 in Richtung seiner Drehachse 41 bzw. parallel zu der Öffnungsachse 65 der Durchgangsöffnung 55 der Lagerplatte 51 von der Halterung 35 demontierbar bzw. wieder an der Halterung 35 montierbar ist.

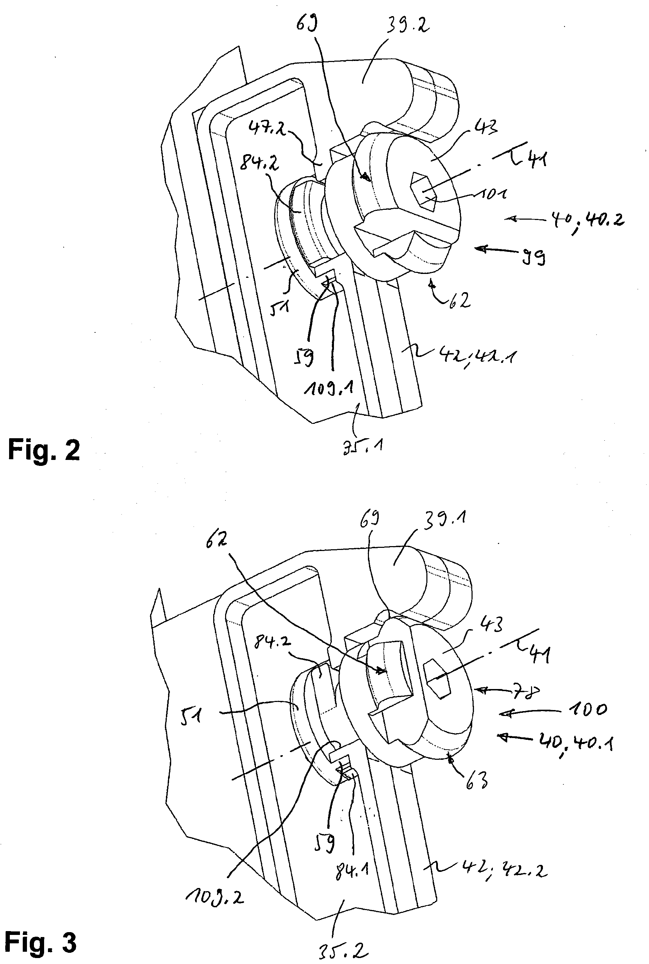

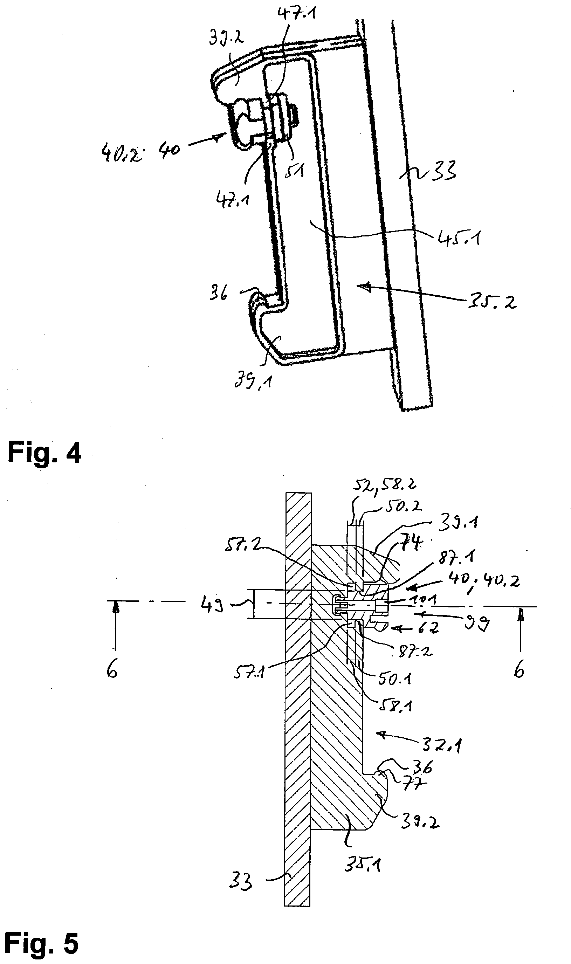

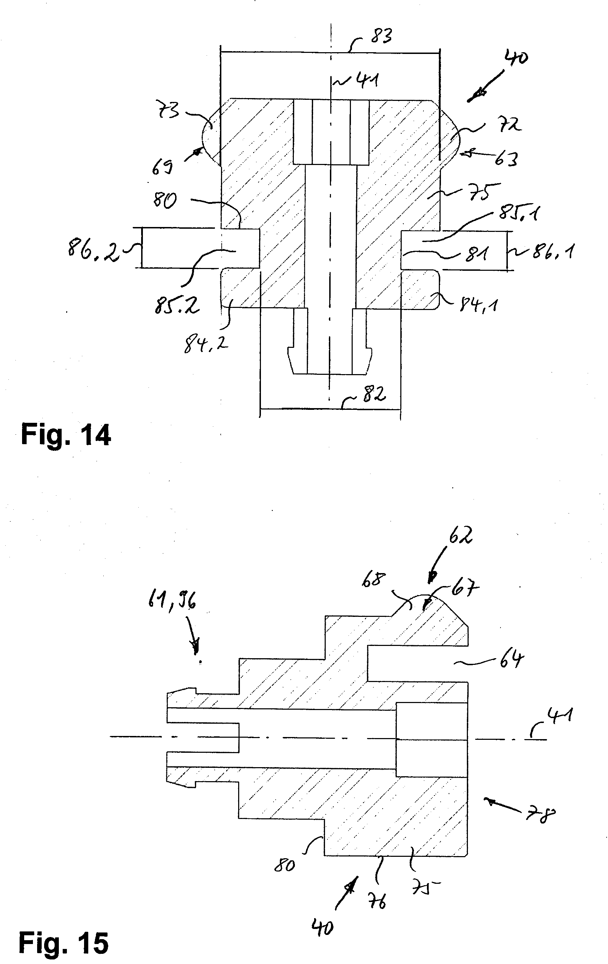

Im Unterschied dazu stellt sich die Situation in der Dreh-Verriegelungsstellung 100 des Dreh-Befestigungskörpers 40 dar. Denn dann hintergreift jeder Sicherungsschenkel 84.1, 84.2 des Dreh-Befestigungskörpers 40 den jeweiligen Fixierschenkel 47.1, 47.2 der Halterung 35, wie insbesondere aus den Figuren 3 und 4 ersichtlich. Außerdem greift dann das starre, erste Rastelement 69 des Dreh-Befestigungskörpers 40 in die zugeordnete Rastaufnahme 74 der zweiten, oberen Stütznase 38.2 der Halterung 35 verrastend ein. Wenn zudem noch in der Dreh-Verriegelungsstellung 100 des Dreh-Befestigungskörpers 40 der Fluidverteiler 31 in dem Aufnahmebereich 32 aufgenommen ist, wie in den Figuren 15, 16, 18 und 20 jeweils am Beispiel des zweiten, unteren Fluidverteilers 31.2 veranschaulicht, dann greift außerdem das starre, zweite Rastelement 63 bzw. der starre, zweite Rastelement-Teil des Dreh-Befestigungskörpers 40 als das dann wirksame zweite, obere Rastelement 37 des Aufnahmebereichs 32 in die zugeordnete, obere Rastaufnahme bzw. Nut 38.2 des Fluidverteilers 31 und ferner das starre, erste, untere Rastelement 36 der ersten, unteren Stütznase 39.1 der Halterung 35 in die zugeordnete, untere Rastaufnahme bzw. Nut 38.1 des Fluidverteilers, so dass dann eine formschlüssige sichere Verrastung des Fluidverteilers 31 gegen Ausheben aus der Halterung 35 bzw. aus dem Halterungsgrundkörper 26 derart erreicht ist, dass der Fluidverteiler 31 nicht ohne Werkzeugeinsatz oder Gewaltausübung zumindest in einer Richtung parallel zu einer gedachten, die Drehachse 41 des Dreh-Befestigungskörpers 40 enthaltenden Bewegungsebene aus dem Aufnahmebereich 32 wegnehmbar bzw. entfernbar ist und auch nicht aus dem Aufnahmebereich 32 ausdrehbar ist.

Die Montage eines Fluidverteilers 31 erfolgt wie nachstehend beschrieben:

Zunächst wird der Halterungsgrundkörper 26 mit seiner Tragstruktur- bzw. Wandanlagefläche 34 an der nicht gezeigten Tragstruktur bzw. Wand festgelegt. Anschließend wird der Fluidverteiler 31 in einen Aufnahmebereich 32 der beiden Aufnahmebereiche 32.1, 32.2 der Tragstrukturhalterung 25 aufgenommen. Dazu wird zunächst das starre, erste, untere Rastelement 36 des Aufnahmebereichs 32 des Halterungsgrundkörpers 26 bzw. der Halterung 35 in die als Nut ausgebildete erste, untere, Rastaufnahme 38.1 des Fluidverteilers 31 eingeführt bzw. umgekehrt. Daran anschließend wird der an dem starren, ersten, unteren Rastelement 36 anliegende Fluidverteiler 31 so lange drehend in Richtung des Aufnahmebereichs 32 bzw. in Richtung dessen Anlagefläche 42 in den Aufnahmebereich 32 des Halterungsgrundkörpers 26 bzw. der Halterung 35 bewegt, bis der flexible erste Rastelement-Teil bzw. das flexible Rastelement 62 des sich in der Dreh-Fixierstellung 99 befindlichen Dreh-Befestigungskörpers 40 bzw. des zuvor in seine Dreh-Fixierstellung 99 überführten Dreh-Befestigungskörpers 40 in einer noch freien, zweiten, oberen Rastaufnahme 38.2 des Fluidverteilers 31 verrastet ist oder verrastend aufgenommen ist. Dann ist auch das starre, erste, untere Rastelement 36 des Aufnahmebereichs 32 in der ersten, unteren Rastaufnahme 38.1 des Fluidverteilers 31 verrastend aufgenommen. Auf diese Art und Weise ist der Fluidverteiler 31 zunächst in einer Vormontage-Stellung in dem Aufnahmebereich 32 wiederlösbar aufgenommen befestigt. In der Vormontage-Stellung ist der Fluidverteiler 31 gegen ein unbeabsichtigtes Herausdrehen und gegen ein Herausfallen aus dem Aufnahmebereich 32 fixiert. Ferner ist in der Vormontagestellung eine Ausrichtverschiebung des Fluidverteilers 31 relativ zu dem Halterungsgrundkörper 26 bzw. relativ zu der Halterung 35 in einer Quer-Verschieberichtung 107 parallel zu der Anlagefläche 42 der Halterung 35 und senkrecht zu der Drehachse 41 des Dreh-Befestigungskörpers 40 sowie quer bzw. senkrecht zu der Halterung 35 bzw. zu der Leiste 33 möglich. Das Eindrehen des Fluidverteilers 31 in den Aufnahmebereich 32 ist in der Dreh-Fixierstellung 99 des Dreh-Befestigungskörpers 40 aufgrund der Flexibilität des flexiblen Rastelements 62 bzw. des flexiblen, ersten Rastelement-Teils möglich. Bei dem Eindrehen des Fluidverteilers 31 wird zunächst das freie Hakenende 67 des Schnapphakens 62 durch eine Außenwand des Fluidverteilers 31 elastisch in Richtung zu der Drehachse 41 bzw. zu der zweiten, oberen Stütznase 39.2 hin ausgelenkt. Bei einem fortgesetzten Eindrehen des Fluidverteilers 31 in den Aufnahmebereich 32, bis er an der Anlagefläche 42 anliegt, stellt sich der Schnapphaken 62 aufgrund der wirkenden elastischen Rückstellkräfte in seine Ausgangsstellung zurück.

Zum Zwecke einer Fertigmontage des Fluidverteilers 31 wird anschließend der Drehbefestigungskörper 40 von seiner Dreh-Fixierstellung 99 durch eine Drehung im Uhrzeigersinn um seine Drehachse 41 bis in seine Dreh-Verriegelungsstellung 100 gedreht. Dann ist der starre, zweite Rastelement-Teil 63 bzw. das starre, zweite Rastelement des Dreh-Befestigungskörpers 40 in der oberen Rastaufnahme 38.2 des Fluidverteilers 31 verrastend aufgenommen und außerdem ist dann das starre, erste Rastelement 69 des Dreh-Befestigungskörpers 40 in der Rastaufnahme 74 der zweiten, oberen Stütznase 39.2 der Halterung aufgenommen, so dass dann der Fluidverteiler 31 in dem Aufnahmebereich 32 in einer Fertigmontage-Stellung 108 in dem Aufnahmebereich 32 verriegelt ist, in welcher der Fluidverteiler 31 nicht ohne Werkzeugeinsatz oder Gewalteinwirkung zumindest in einer Richtung parallel zu einer gedachten, die Drehachse 41 des Dreh-Befestigungskörpers 40 enthaltenden Bewegungsebene aus dem Aufnahmebereich 32 entfernbar bzw. wegnehmbar ist und auch nicht aus dem Aufnahmebereich 32 herausdrehbar ist.

Im an der Tragstrukturhalterung 25 montierten Zustand des Fluidverteilers 31 bilden die Tragstrukturhalterung 25 und der Fluidverteiler 31 eine Montageanordnung 110 aus. Dann ist der Fluidverteiler (31) über seine erste Rastaufnahme (38; 38.1) in oder an dem ersten Rastelement (36) des Aufnahmebereichs (32) verrastet oder verrastend aufgenommen. Ferner ist dann der Fluidverteiler (31), abhängig davon, ob sich der Dreh-Befestigungskörpers (40) in seiner Dreh-Fixierstellung (99) oder in seiner Dreh-Verriegelungsstellung (100) befindet, über seine zweite Rastaufnahme (38; 38.2) entweder in oder an dem flexiblen, ersten Rastelement-Teil (62) des Dreh-Befestigungskörpers (40) derart verrastet oder verrastend aufgenommen, dass der Fluidverteiler (31; 31.1, 31.2) in dem Aufnahmebereich (32; 32.1, 32.2) gegen unbeabsichtigtes Herausdrehen und gegen Herausfallen aus dem Aufnahmebereich (32; 32.1, 32.2) in einer Vormontage-Stellung fixiert ist, in welcher sowohl eine Ausrichtverschiebung des Fluidverteilers (31; 31.1, 31.2) relativ zu dem Dreh-Befestigungskörper (40) und damit relativ zu dem Halterungsgrundkörper (26) als auch ein Wegnehmen des Fluidverteilers (31; 31.1, 31.2) von dem Halterungsgrundkörper (26) ermöglicht ist, oder in oder an dem starren, zweiten Rastelement-Teil (63) des Dreh-Befestigungskörpers (40) derart verrastet oder verrastend aufgenommen ist, dass der Fluidverteiler (31; 31.1, 31.2) in dem Aufnahmebereich (32; 32.1, 32.2) in einer Fertigmontage-Stellung (108) verriegelt ist, in welcher der Fluidverteiler (31) nicht ohne Werkzeugeinsatz oder Gewalteinwirkung zumindest in einer Richtung parallel zu einer gedachten, die Drehachse (41) des Dreh-Befestigungskörpers (40) enthaltenden Bewegungsebene aus dem Aufnahmebereich (32) wegnehmbar bzw. entfernbar ist.

Zusammengefasst kann ein wesentlicher Erfindungsteil auch wie folgt dargestellt werden: Eine Tragstrukturhalterung (25) für einen Fluidverteiler (31), umfasst einen Halterungsgrundkörper (26), der eine Tragstrukturanlagefläche (34) zur Anlage an einer Tragstruktur und einen Aufnahmebereich (32) zur Aufnahme des Fluidverteilers (31) aufweist. Der Aufnahmebereich (32) weist wenigstens ein erstes Rastelement (36) und wenigstens ein zweites Rastelement (37) auf. An dem Halterungsgrundkörper (26) ist ein Dreh-Befestigungskörper (40) zum lösbaren Befestigen des Fluidverteilers (31) in dem Aufnahmebereich (32) des Halterungsgrundkörpers (26) vorgesehen. Der Dreh-Befestigungskörper (40) ist an dem Halterungsgrundkörper (26) relativ zu diesem um eine Drehachse (41) von einer Dreh-Fixierstellung (99) in eine Dreh-Verriegelungsstellung (100), und umgekehrt, drehbar, vorzugsweise lösbar, befestigt. Der Dreh-Befestigungskörper (40) umfasst einen flexiblen Rastelement-Teil (62) und einen starren Rastelement-Teil (63), von denen, abhängig von den vorgenannten Drehstellungen (99, 100) des Dreh-Befestigungskörpers (40), entweder der flexible Rastelement-Teil (62) oder der starre Rastelement-Teil (63) mit einer Rastaufnahme (38) des Fluidverteilers (31) in Eingriff bringbar sind oder in Eingriff stehen.

Es versteht sich, dass die Erfindung nicht auf das in den Figuren gezeigte und vorstehend beschriebenen Ausführungsbeispiel beschränkt ist, sondern dass eine erfindungsgemäße Tragstrukturhalterung, ein erfindungsgemäßer Fluidverteiler, eine erfindungsgemäße Montageanordnung und/oder ein erfindungsgemäßes Verfahren zur Montage der bzw. einer erfindungsgemäßen Tragstrukturhalterung im Rahmen der, insbesondere in den Ansprüchen und in der Beschreibung niedergelegten Erfindungsgedanken, auch anders ausgebildet, dimensioniert und/oder gestaltet sein kann bzw. können. Insbesondere sind erfindungsgemäß die den Ansprüchen und der Beschreibung entnehmbaren technischen Merkmale und Maßnahmen, soweit ausführbar, einzeln oder in einer Mehrzahl beliebig kombinierbar.

### Bezugszeichenliste

- 25: Tragstrukturhalterung/Wandhalterung/Halter
- 26: Halterungsgrundkörper
- 31: Fluidverteiler/Wasserverteiler/Heizkreisverteiler
- 31.1: erster/oberer Fluidverteiler/Wasserverteiler/ Heizkreisverteiler
- 31.2: zweiter/unterer Fluidverteiler/Wasserverteiler/ Heizkreisverteiler
- 32: Aufnahmebereich
- 32.1: erster/oberer Aufnahmebereich
- 32.2: zweiter/unterer Aufnahmebereich
- 33: Basiskörper/Leiste
- 34: Tragstrukturanlagefläche/Wandanlagefläche
- 34.1: Tragstrukturanlagefläche/Wandanlagefläche
- 34.2: Tragstrukturanlagefläche/Wandanlagefläche
- 35: Halterung/Träger
- 35.1: erste(r)/obere(r) Halterung/Träger
- 35.2: zweite(r)/untere(r) Halterung/Träger
- 36: erstes/unteres Rastelement von 32
- 37: zweites/oberes Rastelement von 32
- 38: Rastaufnahme/Axial- bzw. Längsnut von 32
- 38.1: Rastaufnahme/Axial- bzw. Längsnut von 32
- 38.2: Rastaufnahme/Axial- bzw. Längsnut von 32
- 38.3: Rastaufnahme/Axial- bzw. Längsnut von 32
- 38.4: Rastaufnahme/Axial- bzw. Längsnut von 32
- 39.1: erst(r)/untere(r) Befestigungs- und/oder Stützkörper/ Stütznase von 35
- 39.2: erst(r)/untere(r) Befestigungs- und/oder Stützkörper/ Stütznase von 35
- 40: Dreh-Befestigungskörper
- 40.1: erster/oberer Dreh-Befestigungskörper
- 40.2: zweiter/unterer Dreh-Befestigungskörper
- 41: Drehachse
- 42: Anlagefläche
- 42.1: Anlagefläche
- 42.2: Anlagefläche
- 43: Befestigungs- bzw. Betätigungskopf von 40
- 44: Längsachse von 33
- 45.1: Längsseite von 35
- 45.2: Längsseite von 35
- 46: Aufnahmeöffnung
- 47.1: erster/unterer Fixierschenkel/Fixierkörper
- 47.2: zweiter/oberer Fixierschenkel/Fixierkörper
- 48.1: freies Ende von 47.1
- 48.2: freies Ende von 47.2
- 49: Fixierschenkel-Abstand
- 50.1: Fixierschenkel-Dicke
- 50.2: Fixierschenkel-Dicke
- 51: Lagerplatte
- 52: Abstand
- 53: Lagerfläche von 51
- 54: Lagerplatten-Dicke
- 55: Durchgangsöffnung/Rastaufnahme/Ausnehmung
- 56: Öffnungsachse von 55
- 57.1: erste/untere Nut/Sicherungsnut
- 57.2: zweite/obere Nut/Sicherungsnut
- 58.1: Nutbreite von 57.1
- 58.2: Nutbreite von 57.2
- 59: Anschlagsteg/Drehbegrenzungsanschlag
- 60: Öffnungsteil von 46
- 61: Befestigungskörper
- 62: flexibler/erster Rastelement-Teil/flexibles/ erstes Rastelement/Schnapphaken von 40
- 63: starrer/zweiter Rastelement-Teil, starres/zweites Rastelement von 40
- 64: Schlitz
- 65.1: Schlitzfläche/(zweite) Abflachung
- 65.2: Schlitzfläche/Abflachung
- 66: Schlitzbreite/Abstand
- 67: freies Hakenende von 62
- 68: V- bzw. U-förmiger Querschnitt von 67
- 69: (starres/erstes) Rastelement von 40
- 70.1: Umfangswinkel
- 70.2: Umfangswinkel
- 71.1: Sicherungsschenkel-Dicke von 84.1
- 71.2: Sicherungsschenkel-Dicke von 84.2
- 72: V- bzw. U-förmiger Querschnitt von 63
- 73: V- bzw. U-förmiger Querschnitt von 69
- 74: Rastaufnahme von 39.2
- 75: Stütz- und Lagerteil von 40
- 76: Außenoberfläche von 75
- 77: V- bzw. U-förmiger Querschnitt von 36
- 78: Betätigungsende von 40
- 79: (erste) Abflachung
- 80: Lager-Ringfläche
- 81: (kreiszylindrischer) Abschnitt
- 82: Außendurchmesser von 81
- 83: Außendurchmesser von 75
- 84.1: (erster) Sicherungsschenkel/Sicherungskörper
- 84.2: (zweiter) Sicherungsschenkel/Sicherungskörper
- 85.1: Nut/Sicherungsnut
- 85.2: Nut/Sicherungsnut
- 86.1: Nutbreite von 85.1
- 86.2: Nutbreite von 85.2
- 87.1: freies Ende von 84.1
- 87.2: freies Ende von 84.2
- 88.1: (abgesetzte) (erste) Anschlagfläche von 84.1
- 88.2: (nicht abgesetzte) (zweite) Anschlagfläche von 84.2
- 89: Querabstand
- 90: Stütz- und Lagefläche
- 91: (freies) Befestigungsende von 40
- 92.1: Schnapphaken
- 92.2: Schnapphaken
- 93: Schlitz
- 94.1: Schlitzfläche
- 94.2: Schlitzfläche
- 95: Schlitzbreite/Abstand
- 96: Schnappelement
- 97.1: Hakenteil von 92.1
- 97.2: Hakenteil von 92.2
- 98: Schnappverbindung
- 99: erste Drehstellung/Dreh-Fixierstellung
- 100: zweite Drehstellung/Dreh-Verriegelungsstellung
- 101: Werkzeugaufnahme/Innensechskant
- 102: Axialrichtung
- 103: Gehäuse
- 104.1: Längskante/Ecke von 31
- 104.2: Längskante/Ecke von 31
- 104.3: Längskante/Ecke von 31
- 104.4: Längskante/Ecke von 31
- 105.1: Abflachung
- 105.2: Abflachung
- 107: Quer-Verschieberichtung
- 108: Fertigmontage-Stellung
- 109.1: (erste) Anschlagfläche von 59
- 109.2: (zweite) Anschlagfläche von 59
- 110: Montageanordnung

## Patentansprüche

1. Tragstrukturhalterung (25) für wenigstens einen Fluidverteiler (31; 31.1, 31.2), umfassend einen Halterungsgrundkörper (26), der eine Tragstrukturanlagefläche (34) zur Anlage an einer Tragstruktur und wenigstens einen Aufnahmebereich (32; 32.1, 32.2) zur Aufnahme des Fluidverteilers (31; 31.1, 31.2) aufweist, wobei der Aufnahmebereich (32; 32.1, 32.2) wenigstens ein erstes Rastelement (36) zum in Eingriff bringen mit einer ersten Rastaufnahme (38; 38.1) des Fluidverteilers (31, 31.1, 31.2) und wenigstens ein zweites Rastelement (37) zum in Eingriff bringen mit einer zweiten Rastaufnahme (38; 38.2) des Fluidverteilers (31; 31.1, 31.2) aufweist,
**dadurch gekennzeichnet,**
**dass** an dem Halterungsgrundkörper (26) ein Dreh-Befestigungskörper (40) zum lösbaren Befestigen des Fluidverteilers (31; 31.1, 31.2) in dem Aufnahmebereich (32; 32.1, 32.2) des Halterungsgrundkörper (26) befestigt ist, und wobei der Dreh-Befestigungskörper (40) um eine Drehachse (41) von einer Dreh-Fixierstellung (99) in eine Dreh-Verriegelungsstellung (100), und umgekehrt, drehbar ist und das zweite Rastelement (37) umfasst, und wobei das zweite Rastelement (37) einen flexiblen, ersten Rastelement-Teil (62) zur Fixierung des Fluidverteilers (31; 31.1, 31.2) in der Dreh-Fixierstellung (99) des Dreh-Befestigungskörpers (40) in dem Aufnahmebereich (32; 32.1, 32.2) gegen unbeabsichtigtes Herausdrehen und gegen Herausfallen des Fluidverteilers (31; 31.1, 31.2) in der Dreh-Fixierstellung (99) des Dreh-Befestigungskörpers (40) aus dem Aufnahmebereich (32; 32.1, 32.2) in einer Vormontage-Stellung umfasst, in welcher sowohl eine Ausrichtverschiebung des Fluidverteilers (31; 31.1, 31.2) relativ zu dem Dreh-Befestigungskörper (40) und damit relativ zu dem Halterungsgrundkörper (26) als auch ein Wegnehmen des Fluidverteilers (31; 31.1, 31.2) von dem Halterungsgrundkörper (26) ermöglicht ist, und wobei das zweite Rastelement (37) einen starren, zweiten Rastelement-Teil (63) zum Verriegeln des Fluidverteilers (31; 31.1, 31.2) in der Dreh-Verriegelungsstellung (100) des Dreh-Befestigungskörpers (40) in dem Aufnahmebereich (32; 32.1, 32.2) in einer Fertigmontage-Stellung (108) umfasst, in welcher der Fluidverteiler (31, 31.1, 31.2) in der Dreh-Verriegelungsstellung (100) des Dreh-Befestigungskörpers (40) in dem Aufnahmebereich (32; 32.1, 32.2) des Halterungsgrundkörpers (26) derart arretiert ist, dass der Fluidverteiler (31; 31.1.31.2) nicht ohne Werkzeugeinsatz oder Gewalteinwirkung zumindest in einer Richtung parallel zu einer gedachten, die Drehachse (41) des Dreh-Befestigungskörpers (40) enthaltenden Bewegungsebene aus dem Aufnahmebereich (32) wegnehmbar ist.

2. Tragstrukturhalterung nach Anspruch 1, **dadurch gekennzeichnet, dass** der Halterungsgrundkörper (26) einen sich quer oder senkrecht zu der Drehachse (41) des Dreh-Befestigungskörpers (40) erstreckenden Fixierkörper (47.1, 47.2) aufweist und dass der Dreh-Befestigungskörper (40) einen sich quer oder senkrecht zu seiner Drehachse (41) erstreckenden Sicherungskörper (84.1, 84.2) aufweist, die derart aufeinander abgestimmt angeordnet und ausgebildet sind, dass der Sicherungskörper (84.1, 84.2) des Dreh-Befestigungskörpers (40) in der Dreh-Verriegelungsstellung (100) des Dreh-Befestigungskörpers (40) den Fixierkörper (47.1, 47.2) des Halterungsgrundkörpers (26) hintergreift, so dass dann der Dreh-Befestigungskörper (40) mit dem Halterungsgrundkörper (26) gegen Abheben von und/oder gegen Ausheben aus dem Halterungsgrundkörper (26), zumindest in einer Richtung parallel zu der Drehachse (41) des Dreh-Befestigungskörpers (40), gesichert verbunden ist.

3. Tragstrukturhalterung nach Anspruch 1, **dadurch gekennzeichnet, dass** der Halterungsgrundkörper (26) einen ersten Fixierkörper (47.1) und einen zweiten Fixierkörper (47.2) aufweist, wobei der erste Fixierkörper (47.1) und der zweite Fixierkörper (47.2) gegenüber liegend angeordnet sind und sich in einer Richtung quer oder senkrecht zu der Drehachse (41) des Dreh-Befestigungskörpers (40) aufeinander zu erstrecken und dass der Dreh-Befestigungskörper (40) einen ersten Sicherungskörper (84.1) und einen zweiten Sicherungskörper (84.2) aufweist, wobei der erste Sicherungskörper (84.1) und der zweite Sicherungskörper (84.2) sich in einer Richtung quer oder senkrecht von der Drehachse (41) des Dreh-Befestigungskörpers (40) voneinander weg erstrecken, und wobei der erste und der zweite Fixierkörper (47.1, 47.2) sowie der erste und der zweite Sicherungskörper (84.1, 84.2) derart aufeinander abgestimmt angeordnet und ausgebildet sind, dass der erste Sicherungskörper (84.1) des Dreh-Befestigungskörpers (40) in der Dreh-Verriegelungsstellung (100) des Dreh-Befestigungskörpers (40) den ersten Fixierkörper (47.1) des Halterungsgrundkörpers (26) hintergreift und der zweite Sicherungskörper (84.2) des Dreh-Befestigungskörpers (40) den zweiten Fixierkörper (47.2) des Halterungsgrundkörpers (26) hintergreift, so dass dann der Dreh-Befestigungskörper (40) mit dem Halterungsgrundkörper (26) gegen Abheben von und/oder gegen Ausheben aus dem Halterungsgrundkörper (26), zumindest in einer Richtung parallel zu der Drehachse (41) des Dreh-Befestigungskörpers (40), gesichert verbunden ist.

4. Tragstrukturhalterung nach Anspruch 2 oder 3, **dadurch gekennzeichnet, dass** es sich bei dem oder jedem Fixierkörper (47.1, 47.2) des Halterungsgrundkörpers (26) um einen oder jeweils um einen Fixierschenkel (47.1, 47.2) handelt und dass es sich bei dem oder jedem Sicherungskörper (84.1, 84.2) des Dreh-Befestigungskörpers (40) um einen oder jeweils um einen Sicherungsschenkel (84.1, 84.2) handelt, wobei der oder jeder Fixierschenkel (47.1, 47.2) des Halterungsgrundkörpers (26) in der Dreh-Verriegelungsstellung (100) des Dreh-Befestigungskörpers (40) in eine oder jeweils in eine von dem oder jedem Sicherungsschenkel (84.1, 84.2) des Dreh-Befestigungskörpers (40) begrenzte Sicherungsnut (85.1, 85.2) des Dreh-Befestigungskörpers (40) eingreift und/oder wobei der oder jeder Sicherungsschenkel (84.1, 84.2) des Dreh-Befestigungskörpers (40) in der Dreh-Verriegelungsstellung (100) des Dreh-Befestigungskörpers (40) in eine oder jeweils in eine von dem oder jedem Fixierschenkel (47.1, 47.2) des Halterungsgrundkörpers (26) begrenzte Sicherungsnut (57.1, 57.2) des Halterungsgrundkörpers (26) eingreift.

5. Tragstrukturhalterung nach einem der vorstehenden Ansprüche, **dadurch gekennzeichnet, dass** der Dreh-Befestigungskörper (40) eine erste Anschlagfläche (88.1) aufweist und dass der Halterungsgrundkörper (26) einen ersten Drehbegrenzungs-Anschlag (59) zur Begrenzung einer Drehung des Dreh-Befestigungskörpers (40) in einer ersten Drehrichtung aufweist, an dem bei einer Drehung des Dreh-Befestigungskörpers (40) in der ersten Drehrichtung dieser mit seiner ersten Anschlagfläche (88.1) anschlagen kann, so dass der Dreh-Befestigungskörper (40) nicht über die Dreh-Fixierstellung (99) hinaus in der ersten Drehrichtung drehbar ist und/oder dass der Dreh-Befestigungskörper (40) eine zweite Anschlagfläche (88.2) aufweist und dass der Halterungsgrundkörper (26) den oder einen zweiten Drehbegrenzungsanschlag (59) zur Begrenzung einer Drehung des Dreh-Befestigungskörpers (40) in einer zweiten Drehrichtung aufweist, an dem bei einer Drehung des Dreh-Befestigungskörpers (40) in der zweiten Drehrichtung dieser mit seiner zweiten Anschlagfläche (88.2) anschlagen kann, so dass der Dreh-Befestigungskörper 40 nicht über die Dreh-Verriegelungsstellung (100) hinaus in der zweiten Drehrichtung drehbar ist.

6. Tragstrukturhalterung nach einem der vorstehenden Ansprüche, **dadurch gekennzeichnet, dass** die Dreh-Fixierstellung (99) des Dreh-Befestigungskörpers (40) gegenüber der Dreh-Verriegelungsstellung (100) des Dreh-Befestigungskörpers (40) um einen Drehwinkel von mehr als 45 Grad oder von etwa 90 Grad um die Drehachse (41) des Dreh-Befestigungskörpers (40) versetzt ist.

7. Tragstrukturhalterung nach einem der vorstehenden Ansprüche, **dadurch gekennzeichnet, dass** der Dreh-Befestigungskörper (40) ein Befestigungsende (91) und ein von diesem in Richtung seiner Drehachse (41) weg weisendes Betätigungsende (78) aufweist.

8. Tragstrukturhalterung nach Anspruch 7, **dadurch gekennzeichnet, dass** der Dreh-Befestigungskörper (40) an seinem Befestigungsende (91) ein Rast- oder Schnappelement (96) aufweist, über welches der Dreh-Befestigungskörper (40) mit einer Rastaufnahme (55) des Halterungsgrundkörpers (26) unter Ausbildung einer Schnappverbindung (98) lösbar verbunden ist.

9. Montageanordnung, die wenigstens eine Tragstrukturhalterung (25) nach einem der vorstehenden Ansprüche und wenigstens einen Fluidverteiler (31) mit einem sich über eine Gehäuselänge erstreckenden Gehäuse (103) umfasst, dessen Außenwandungen wenigstens eine erste Rastaufnahme (38; 38.1, 38.3) und wenigstens eine zweite Rastaufnahme (38; 38.2, 38.4) aufweisen, die derart angeordnet und ausgebildet sind, dass das erste Rastelement (36) des Aufnahmebereichs (32) der Tragstrukturhalterung (26) in oder an der ersten Rastaufnahme (38; 38.1, 38.3) verrastbar oder verrastend aufnehmbar ist und dass das zweite Rastelement (37; 62, 63) des Aufnahmebereichs (32) der Tragstrukturhalterung (25) in oder an der zweiten Rastaufnahme (38; 38.2, 38.4) verrastbar oder verrastend aufnehmbar ist, wobei der Fluidverteiler (31) über seine erste Rastaufnahme (38; 38.1) in oder an dem ersten Rastelement (36) des Aufnahmebereichs (32) verrastet ist oder verrastend in dem Aufnahmebereich (32) aufgenommen ist, und wobei der Fluidverteiler (31) über seine zweite Rastaufnahme entweder
in der Dreh-Fixierstellung (99) des Dreh-Befestigungskörpers (40) in oder an dem flexiblen, ersten Rastelement-Teil (62) des Dreh-Befestigungskörpers (40) verrastet ist oder verrastend in dem Aufnahmebereich (32) aufgenommen ist
oder
in der Dreh-Verriegelungsstellung (100) in oder an dem starren, zweiten Rastelement-Teil des Dreh-Befestigungskörpers (40) verrastet ist oder verrastend in dem Aufnahmebereich (32) aufgenommen ist.

10. Montageanordnung, die wenigstens eine Tragstrukturhalterung (25) nach einem der Ansprüche 1 bis 8 und wenigstens einen Fluidverteiler (31) mit einem sich über eine Gehäuselänge erstreckenden Gehäuse (103) umfasst, dessen Außenwandungen wenigstens eine erste Rastaufnahme (38; 38.1, 38.3) und wenigstens eine zweite Rastaufnahme (38; 38.2, 38.4) aufweisen, die derart angeordnet und ausgebildet sind, dass das erste Rastelement (36) des Aufnahmebereichs (32) der Tragstrukturhalterung (26) in oder an der ersten Rastaufnahme (38; 38.1, 38.3) verrastbar oder verrastend aufnehmbar ist und dass das zweite Rastelement (37; 62, 63) des Aufnahmebereichs (32) der Tragstrukturhalterung (25) in oder an der zweiten Rastaufnahme (38; 38.2, 38.4) verrastbar oder verrastend aufnehmbar ist, wobei der Fluidverteiler (31) über seine erste Rastaufnahme (38; 38.1) in oder an dem ersten Rastelement (36) des Aufnahmebereichs (32) verrastet oder verrastend aufgenommen ist, und wobei der Fluidverteiler (31) über seine zweite Rastaufnahme (38; 38.2)
entweder
in der Dreh-Fixierstellung (99) des Dreh-Befestigungskörpers (40) in oder an dem flexiblen, ersten Rastelement-Teil (62) des Dreh-Befestigungskörpers (40) derart verrastet oder verrastend aufgenommen ist, dass der Fluidverteiler (31; 31.1, 31.2) in dem Aufnahmebereich (32; 32.1, 32.2) gegen unbeabsichtigtes Herausdrehen und gegen Herausfallen aus dem Aufnahmebereich (32; 32.1, 32.2) in einer Vormontage-Stellung fixiert ist, in welcher sowohl eine Ausrichtverschiebung des Fluidverteilers (31; 31.1, 31.2) relativ zu dem Dreh-Befestigungskörper (40) und damit relativ zu dem Halterungsgrundkörper (26) als auch ein Wegnehmen des Fluidverteilers (31; 31.1, 31.2) von dem Halterungsgrundkörper (26) ermöglicht ist,
oder
in der Dreh-Verriegelungsstellung (100) in oder an dem starren, zweiten Rastelement-Teil (63) des Dreh-Befestigungskörpers (40) derart verrastet oder verrastend aufgenommen ist, dass der Fluidverteiler (31; 31.1, 31.2) in dem Aufnahmebereich (32; 32.1, 32.2) in einer Fertigmontage-Stellung (108) verriegelt ist, in welcher der Fluidverteiler (31) nicht ohne Werkzeugeinsatz oder Gewalteinwirkung zumindest in einer Richtung parallel zu einer gedachten, die Drehachse (41) des Dreh-Befestigungskörpers (40) enthaltenden Bewegungsebene aus dem Aufnahmebereich (32) wegnehmbar ist.

11. Montageanordnung nach Anspruch 9 oder 10, **dadurch gekennzeichnet, dass** das erste Rastelement (36) den Aufnahmebereich (32) auf einer ersten Seite begrenzt und dass in der Dreh-Fixierstellung (99) des Dreh-Befestigungskörpers (40) der flexible erste Rastelement-Teil (62) den Aufnahmebereich (32) auf einer zweiten Seite begrenzt, die der ersten Seite gegenüber liegt, und dass in der Dreh-Verriegelungsstellung (100) des Dreh-Befestigungskörpers (40) der starre zweite Rastelement-Teil (63) den Aufnahmebereich (32) auf der zweiten Seite begrenzt.

12. Montageanordnung nach einem der Ansprüche 9 bis 11, **dadurch gekennzeichnet, dass** die erste Rastaufnahme (38; 38.1, 38.3) des Fluidverteilers (31) als eine nach außen offene erste Nut (38; 38.1, 38.3) ausgebildet ist und dass die zweite Rastaufnahme (38; 38.2, 38.4) des Fluidverteilers (31) als eine nach außen offene zweite Nut (38; 38.2, 38.4) ausgebildet ist, die sich parallel zu der ersten Nut (38; 38.1, 38.3) erstreckt.

13. Verfahren zur Montage eines Fluidverteilers (31) an der Tragstrukturhalterung (25) nach einem der Ansprüche 1 bis 8, wobei der Fluidverteiler (31) ein sich über eine Gehäuselänge erstreckendes Gehäuse (103) umfasst, dessen Außenwandungen wenigstens eine erste Rastaufnahme (38; 38.1, 38.3) und wenigstens eine zweite Rastaufnahme (38; 38.2, 38.4) aufweisen, die derart angeordnet und ausgebildet sind, dass das erste Rastelement (36) des Aufnahmebereichs (32) der Tragstrukturhalterung (26) in oder an der ersten Rastaufnahme (38; 38.1, 38.3) verrastbar oder verrastend aufnehmbar ist und dass das zweite Rastelement (37; 62, 63) des Aufnahmebereichs (32) der Tragstrukturhalterung (25) in oder an der zweiten Rastaufnahme (38; 38.2, 38.4) verrastbar oder verrastend aufnehmbar ist,
das die folgenden Verfahrensschritte umfasst:
- Festlegen des Halterungsgrundkörpers (26) mit seiner Tragstrukturanlagefläche (34) an der Tragstruktur;
- Einführen des ersten Rastelements (36) des Aufnahmebereichs (32) des Halterungsgrundkörpers (26) in die erste Rastaufnahme (38; 38.1) des Fluidverteilers (31) ;
- Eindrehen des Fluidverteilers (31) in den Aufnahmebereich (32) des Halterungsgrundkörpers (26), bis der flexible erste Rastelement-Teil (62) des sich in seiner Dreh-Fixierstellung (99) befindlichen Dreh-Befestigungskörpers (40) oder des in seine Dreh-Fixierstellung (99) überführten Dreh-Befestigungskörpers (40) in oder an der noch freien zweiten Rastaufnahme (38; 38.2) des Fluidverteilers (31) verrastet ist oder verrastend aufgenommen ist, wobei dann auch das erste Rastelement (36) des Aufnahmebereichs (32) in oder an der ersten Rastaufnahme (38; 38.1) des Fluidverteilers (31) verrastet ist oder verrasted aufgenommen ist, so dass dann der Fluidverteiler (31; 31.1, 31.2) in dem Aufnahmebereich (32; 32.1, 32.2) gegen unbeabsichtigtes Herausdrehen und gegen Herausfallen aus dem Aufnahmebereich (32; 32.1, 32.2) in einer oder der Vormontage-Stellung fixiert ist, in welcher sowohl eine Ausrichtverschiebung des Fluidverteilers (31; 31.1, 31.2) relativ zu dem Dreh-Befestigungskörper (40) und damit relativ zu dem Halterungsgrundkörper (26) als auch ein Wegnehmen des Fluidverteilers (31; 31.1, 31.2) von dem Halterungsgrundkörper (26) ermöglicht ist.

14. Verfahren nach Anspruch 13, **gekennzeichnet durch** den folgenden weiteren Verfahrensschritt:
- Drehen des Drehbefestigungskörpers (40) um seine Drehachse (41) bis in die Dreh-Verriegelungsstellung (100), in welcher der starre zweite Rastelement-Teil (63) des Dreh-Befestigungskörpers (40) an oder in der zweiten Rastaufnahme (38; 38.2) des Fluidverteilers (31) derart verrastet ist oder verrastend aufgenommen ist, dass der Fluidverteiler (31) in dem Aufnahmebereich (32) in einer oder der Fertigmontage-Stellung (108) verriegelt ist, in welcher der Fluidverteiler (31) nicht ohne Werkzeugeinsatz oder Gewalteinwirkung zumindest in einer Richtung parallel zu einer gedachten, die Drehachse (41) des Dreh-Befestigungskörpers (40) enthaltenden Bewegungsebene aus dem Aufnahmebereich (32) wegnehmbar ist.

15. Verfahren nach Anspruch 13, **gekennzeichnet durch** den folgenden weiteren Verfahrensschritt:
- Drehen des Drehbefestigungskörpers (40) um seine Drehachse (41) bis in die Dreh-Verriegelungsstellung (100), in welcher der starre zweite Rastelement-Teil (63) des Dreh-Befestigungskörpers (40) an oder in der zweiten Rastaufnahme (38; 38.2) des Fluidverteilers (31) verrastet ist oder verrastend aufgenommen ist, und in welcher der starre zweite Rastelement-Teil des Dreh-Befestigungskörpers und/oder wenigstens ein starrer weiterer Rastelement-Teil (69) des Dreh-Befestigungskörpers (40) an oder in einer zweiten Rastaufnahme (74.2) des Halterungsgrundkörpers (26) oder eines oder des starren Befestigungs- und/oder Stützkörpers (39.2) des Halterungsgrundkörpers (26) verrastet ist oder verrastet aufgenommen ist, derart, dass der Fluidverteiler (31) in dem Aufnahmebereich (32) in einer oder der Fertigmontage-Stellung (108) verriegelt ist, in welcher der Fluidverteiler (31) nicht ohne Werkzeugeinsatz oder Gewalteinwirkung zumindest in einer Richtung parallel zu einer gedachten, die Drehachse (41) des Dreh-Befestigungskörpers (40) enthaltenden Bewegungsebene aus dem Aufnahmebereich (32) wegnehmbar ist.

## Claims

1. Support structure mount (25) for at least one fluid distributor (31; 31.1, 31.2), comprising a mount base body (26) having at least one support structure attachment surface (34) for attachment to a support structure and at least one receiving region (32; 32.1, 32.2) for receiving the fluid distributor (31; 31.1, 31.2), wherein the receiving region (32; 32.1, 32.2) comprises at least one first detent element (36) for engagement with a first detent receptacle (38; 381.1) of the fluid distributor (31, 31.1, 31.2) and at least one second detent element (37) for engagement with a second detent receptacle (38; 38.2) of the fluid distributor (31; 31.1, 31.2), **characterised in that** a rotary fastening body (40) for detachable fastening of the fluid distributor (31; 31.1, 31.2) in the receiving region (32; 32.1, 32.2) of the mount base body (26) is secured to the mount base body (26), wherein the rotary fastening body (40) is rotatable about an axis (41) of rotation from a rotational fixing setting (99) to a rotational locking setting (100) and conversely and comprises the second detent element (37), wherein the second detent element (37) comprises a flexible first detent element part (62) for fixing the fluid distributor (31; 31.1, 31.2) in the rotational fixing setting (99) of the rotary fastening body (40) in the receiving region (32; 32.1, 32.2) against unintended rotation out and dropping out of the fluid distributor (31; 31.1, 31.2) in the rotational fixing setting (99) of the rotary fastening body (40) from the receiving region (32; 32.1, 32.2) into a premounting setting in which not only an orientating displacement of the fluid distributor (31; 31.1, 31.2) relative to the rotary fastening body (40) and thus relative to the mount base body (26), but also removal of the fluid distributor (31; 31.1, 31.2) from the mount base body (26) are made possible, and wherein the second detent element (37) comprises a rigid, second detent element part (63) for locking the fluid distributor (31; 31.1, 31.2) in the rotational locking setting (100) of the rotary fastening body (40) in the receiving region (32; 32.1, 32.2) in a final mounting setting (108) in which the fluid distributor (31, 31.1, 31.2) in the rotational locking setting (100) of the rotary fastening body (40) is so locked in the receiving region (32; 32.1, 32.2) of the mount base body (26) that the fluid distributor (31; 31.1, 31.2) is not removable from the receiving region (32) at least in a direction parallel to a notional movement plane containing the axis (41) of rotation of the rotary fastening body (40) without use of a tool or exercise of force.

2. Support structure mount according to claim 1, **characterised in that** the mount base body (26) comprises a fixing body (47.1, 47.2) extending transversely or perpendicularly to the axis (41) of rotation of the rotary fastening body (40) and that the rotary fastening body (40) comprises a securing body (84.1, 84.2) extending transversely or perpendicularly to its axis (41) of rotation, the fixing body and securing body being so arranged and constructed in adaptation to one another that the securing body (84.1, 84.2) of the rotary fastening body (40) in the rotational locking setting (100) of the rotary fastening body (40) engages behind the fixing body (47.1, 47.2) of the mount base body (26) so that the rotary fastening body (40) is then securely connected with the mount base body (26) against lifting off from and/or lifting out of the mount base body (26) at least in a direction parallel to the axis (41) of rotation of the rotary fastening body (40).

3. Support structure mount according to claim 1, **characterised in that** the mount base body (26) comprises a first fixing body (47.1) and a second fixing body (47.2), wherein the first fixing body (47.1) and the second fixing body (47.2) are arranged oppositely and to extend towards one another in a direction transverse or perpendicular to the axis (41) of rotation of the rotary fastening body (40) and that the rotary fastening body (40) comprises a first securing body (84.1) and a second securing body (84.2), wherein the first securing body (84.1) and the second securing body (84.2) extend away from one another in a direction transverse or perpendicular to the axis (41) of rotation of the rotary fastening body (40), and wherein the first and the second fixing bodies (47.1, 47.2) and the first and second securing bodies (84.1, 84.2) are so arranged and constructed in adaptation to one another that the first securing body (84.1) of the rotary fastening body (40) in the rotational locking setting (100) of the rotary fastening body (40) engages behind the first fixing body (47.1) of the mount base body (26) and the second securing body (84.2) of the rotary fastening body (40) engages behind the second fixing body (47.2) of the mount base body (26) so that the rotary fastening body (40) is then securely connected with the mount base body (26) against lifting off from and/or lifting out of the mount base body (26) at least in a direction parallel to the axis (41) of rotation of the rotary fastening body (40).

4. Support structure mount according to claim 2 or 3, **characterised in that** the or each fixing body (47.1, 47.2) of the mount base body (26) is a or a respective fixing limb (47.1, 47.2) and that the or each securing body (84.1, 84.2) of the rotary fastening body (40) is a or a respective securing limb (84.1, 84.2), wherein the or each fixing limb (47.1, 47.2) of the mount base body (26) in the rotational locking setting (100) of the rotary fastening body (40) engages in a or a respective securing groove (85.1, 85.2), which is bounded by the or each securing limb (84.1, 84.2) of the rotary fastening body (40), of the rotary fastening body (40) and/or wherein the or each securing limb (84.1, 84.2) of the rotary fastening body (40) in the rotational locking setting (100) of the rotary fastening body (40) engages in a or a respective securing groove (47.1, 47.2), which is bounded by the or each fixing limb (47.1, 47.2) of the mount base body (26), of the mount base body (26).

5. Support structure mount according to any one of the preceding claims, **characterised in that** the rotary fastening body (40) has a first abutment surface (88.1) and the mount base body (26) has a first rotation limitation abutment (59) for limiting rotation of the rotary fastening body (40) in a first rotational direction, against which abutment on rotation of the rotary fastening body (40) in the first rotational direction this body can abut by its first abutment surface (88.1) so that the rotary fastening body (40) is not rotatable beyond the rotational fixing setting (99) in the first direction of rotation, and/or that the rotary fastening body (40) has a second abutment surface (88.2) and the mount base body (26) has the or a second rotation limitation abutment (59) for limiting rotation of the rotary fastening body (40) in a second rotational direction, against which abutment on rotation of the rotary fastening body (40) in the second rotational direction this body can abut by its second abutment surface (88.2) so that the rotary fastening body (40) is not rotatable beyond the rotational locking setting (100) in the second direction of rotation.

6. Support structure mount according to any one of the preceding claims, **characterised in that** the rotational fixing setting (99) of the rotary fastening body (40) is offset relative to the rotational locking setting (100) of the rotary fastening body (40) by a rotational angle of more than 45 degrees or of approximately 90 degrees about the axis (41) of rotation of the rotary fastening body (40).

7. Support structure mount according to any one of the preceding claims, **characterised in that** the rotary fastening body (40) has a fastening end (91) and an actuating end (78) facing away therefrom in the direction its axis (41) of rotation.

8. Support structure mount according to claim 7, **characterised in that** the rotary fastening body (40) has at its fastening end (91) a detent or snap element (96) by way of which the rotary fastening element (40) is releasably connected with a detent receptacle (55) of the mount base body (26) with formation of a snap connection (98).

9. Mounting arrangement comprising at least one support structure mount (25) according to any one of the preceding claims and at least one fluid distributor (31) with a housing (103), which extends over a housing length and the outer walls of which have at least one first detent receptacle (38, 38.1, 38.3) and at least one second detent receptacle (38; 38.2, 38.4), which are so arranged and constructed that the first detent element (36) of the receiving region (32) of the support structure mount (25) is detentable or capable of detenting reception in or at the first detent receptacle (38; 38.1, 38.3) and that the second detent element (37; 62, 63) of the receiving region (32) of the support structure mount (25) is detentable or capable of detenting reception in or at the second detent receptacle (38, 38.2, 38.4), wherein the fluid distributor (31) by way of its first detent receptacle (38; 38.1) is detented in or at the first detent element (36) of the receiving region (32) or is received in detenting manner in the receiving region (32) and wherein the fluid distributor (31) by way of its second detent receptacle
either
in the rotational fixing setting (99) of the rotary fastening body (40) is detented in or at the flexible first detent element part (62) of the rotary fastening body (40) or received in detenting manner in the receiving region (32)
or
in the rotational locking setting (100) is detented in or at the rigid second detent element part of the rotary fastening body (40) or is received in detenting manner in the receiving region (32).

10. Mounting arrangement comprising at least one support structure mount (25) according to any one of claims 1 to 8 and at least one fluid distributor (31) with a housing (103), which extends over a housing length and the outer walls of which have at least one first detent receptacle (38, 38.1, 38.3) and at least one second detent receptacle (38; 38.2, 38.4), which are so arranged and constructed that the first detent element (36) of the receiving region (32) of the support structure mount (25) is detentable or capable of detenting reception in or at the first detent receptacle (38; 38.1, 38.3) and that the second detent element (37; 62, 63) of the receiving region (32) of the support structure mount (25) is detentable or capable of detenting reception in or at the second detent receptacle (38, 38.2, 38.4), wherein the fluid distributor (31) by way of its first detent receptacle (38; 38.1) is detented in or at the first detent element (36) of the receiving region (32) or is received in detenting manner in the receiving region (32) and wherein the fluid distributor (31) by way of its second detent receptacle is
either
in the rotational fixing setting (99) of the rotary fastening body (40) is detented or received in detenting manner in such a way in or at the flexible first detent element part (62) of the rotary fastening body (40) that the fluid distributor (31; 31.1, 31.2) is fixed in the receiving region (32; 32.1, 32.2) against unintended rotation out and dropping out of the receiving region (32; 32.1, 32.2) into a premounting setting in which not only an orientating displacement of the fluid distributor (31; 31.1, 31.2) relative to the rotary fastening body (40) and thus relative to the mount base body (26), but also removal of the fluid distributor (31; 31.1, 31.2) from the mount base body (26) are made possible,
or
in the rotational locking setting (100) is detented or received in detenting manner in such a way in or at the rigid, second detent element part (63) of the rotary fastening body (40) that the fluid distributor (31; 31.1, 31.2) is locked in the receiving region (32; 32.1, 32.2) in a final mounting setting (108) in which the fluid distributor (31) is not removable from the receiving region (32) at least in a direction parallel to a notional movement plane containing the axis (41) of rotation of the rotary fastening body (40) without use of a tool or exercise of force.

11. Mounting arrangement according to claim 9 or 10, **characterised in that** the first detent element (36) bounds the receiving region (32) on a first side, that in the rotational fixing setting (99) of the rotary fastening body (40) the flexible first detent element part (62) bounds the receiving region (32) on a second side opposite the first side and that in the rotational locking setting (100) of the rotary fastening body (40) the rigid second detent element part (63) bounds the receiving region (32) on the second side.

12. Mounting arrangement according to any one of claims 9 to 11, **characterised in that** the first detent receptacle (38; 38.1, 38.3) of the fluid distributor (31) is formed as an outwardly open first groove (38; 38.1, 38.3) and that the second detent receptacle (38; 38.2, 38.4) of the fluid distributor (31) is formed as an outwardly open second groove (38; 38.2, 38.4) extending parallel to the first groove (38; 38.1, 38.3).

13. Method of mounting a fluid distributor (31) on the support structure mount (25) according to any one of claims 1 to 8, wherein the fluid distributor (31) comprises a housing (103) which extends over a housing length and the outer walls of which have at least one first detent receptacle (38, 38.1, 38.3) and at least one second detent receptacle (38; 38.2, 38.4), which are so arranged and constructed that the first detent element (36) of the receiving region (32) of the support structure mount (25) is detentable or capable of detenting reception in or at the first detent receptacle (38; 38.1, 38.3) and that the second detent element (37; 62, 63) of the receiving region (32) of the support structure mount (25) is detentable or capable of detenting reception in or at the second detent receptacle (38, 38.2, 38.4),
which comprises the following method steps:
- fixing the mount base body (26) by its support structure attachment surface (34) to the support structure;
- introducing the first detent element (36) of the receiving region (32) of the mount base body (26) into the first detent receptacle (38; 38.1) of the fluid distributor (31); and
- rotating the fluid distributor (31) in the receiving region (32) of the mount base body (26) until the flexible first detent element part (62) of the rotary fastening body (40) disposed in its rotational fixing setting (99) or of the rotary fastening body (40) transferred into its rotational fixing setting (99) is detented or received in detenting manner in or at the still free second detent receptacle (38; 38.2) of the fluid distributor (31), wherein the first detent element (36) of the receiving region (32) is then also detented or received in detenting manner in or at the first detent receptacle (38; 38.1) of the fluid distributor (31) so that the fluid distributor (31; 31.1, 31.2) is then fixed in the receiving region (32; 32.1, 32.2) against unintended rotation out and dropping out of the receiving region (32; 32.1, 32.2) into a or the premounting setting in which not only an orientating displacement of the fluid distributor (31; 31.1, 31.2) relative to the rotary fastening body (40) and thus relative to the mount base body (26), but also removal of the fluid distributor (31; 31.1, 31.2) from the mount base body (26) are made possible.

14. Method according to claim 13, **characterised by** the following further method step:
- rotating the rotary fastening body (40) about its axis (41) of rotation until in the rotational locking setting (100) in which the rigid second detent element part (63) of the rotary fastening body (40) is so detented or received in detenting manner at or in the second detent receptacle (38; 38.2) of the fluid distributor (31) that the fluid distributor (31) is locked in the receiving region (32) in a or the final mounting setting (108) in which the fluid distributor (31) is not removable from the receiving region (32) at least in a direction parallel to a notional movement plane containing the axis (41) of rotation of the rotary fastening body (40) without use of a tool or exercise of force.

15. Method according to claim 13, **characterised by** the following further method step:
- rotating the rotary fastening body (40) about its axis (41) of rotation until in the rotational locking setting (100) in which the rigid second detent element part (63) of the rotary fastening body (40) is detented or received in detenting manner at or in the second detent receptacle (38; 38.2) of the fluid distributor (31) and in which the rigid second detent element part of the rotary fastening body and/or at least one rigid further detent element part (69) of the rotary fastening body (40) is so detented or received in detenting manner at or in a second detent receptacle (74.2) of the mount base body (26) or of a or the rigid fastening and/or support body (39.2) of the mount base body (26) that the fluid distributor (31) is locked in the receiving region (32) in a or the final mounting setting (108) in which the fluid distributor (31) is not removable from the receiving region (32) at least in a direction parallel to a notional movement plane containing the axis (41) of rotation of the rotary fastening body (40) without use of a tool or exercise of force.

## Revendications

1. Support (25) sur structure porteuse pour au moins un répartiteur de fluide (31 ; 31.1, 31.2), comprenant un corps de base (26) de support, qui présente une face (34) d'application sur structure porteuse, pour l'application sur une structure porteuse, et au moins une région réceptrice (32 ; 32.1, 32.2) pour recevoir le répartiteur de fluide (31 ; 31.1, 31.2), sachant que la région réceptrice (32 ; 32.1, 32.2) présente au moins un premier élément d'enclenchement (36) destiné à entrer en prise avec un premier logement d'enclenchement (38 ; 38.1) du répartiteur de fluide (31 ; 31.1, 31.2), et au moins un deuxième élément d'enclenchement (37) destiné à entrer en prise avec un deuxième logement d'enclenchement (38 ; 38.2) du répartiteur de fluide (31 ; 31.1, 31.2),
**caractérisé en ce qu'**un corps (40) de fixation par rotation est fixé sur le corps de base (26) du support pour la fixation amovible du répartiteur de fluide (31 ; 31.1, 31.2) dans la région réceptrice (32 ; 32.1, 32.2) du corps de base (26) du support, et sachant que le corps (40) de fixation par rotation est rotatif autour d'un axe de rotation (41) d'une position (99) d'immobilisation par rotation dans une position (100) de verrouillage par rotation, et inversement, et comprend le deuxième élément d'enclenchement (37), et sachant que le deuxième élément d'enclenchement (37) comprend une première partie (62), flexible, d'élément d'enclenchement pour, dans la position (99) d'immobilisation par rotation du corps (40) de fixation par rotation, immobiliser le répartiteur de fluide (31 ; 31.1, 31.2) dans la région réceptrice (32 ; 32.1, 32.2) dans une position de prémontage de manière à empêcher la rotation involontaire et la chute du répartiteur de fluide (31 ; 31.1, 31.2) hors de la région réceptrice (32 ; 32.1, 32.2) dans la position (99) d'immobilisation par rotation du corps (40) de fixation par rotation, position de prémontage qui permet aussi bien une translation d'alignement du répartiteur de fluide (31 ; 31.1, 31.2) par rapport au corps (40) de fixation par rotation, et donc par rapport au corps de base (26) du support, que de retirer du corps de base (26) du support le répartiteur de fluide (31 ; 31.1, 31.2), et sachant que le deuxième élément d'enclenchement (37) comprend une deuxième partie (63), rigide, d'élément d'enclenchement pour, dans la position (100) de verrouillage par rotation du corps (40) de fixation par rotation, verrouiller le répartiteur de fluide (31 ; 31.1, 31.2) dans la région réceptrice (32 ; 32.1, 32.2) dans une position (108) de montage final, dans laquelle le répartiteur de fluide (31 ; 31.1, 31.2) est, dans la position (100) de verrouillage par rotation du corps (40) de fixation par rotation, bloqué dans la région réceptrice (32 ; 32.1, 32.2) du corps de base (26) du support de telle sorte que le répartiteur de fluide (31 ; 31.1, 31.2) ne peut pas être retiré de la région réceptrice (32) sans utiliser un outil ou recourir à la force, au moins dans une direction parallèle à un plan de mouvement imaginaire contenant l'axe de rotation (41) du corps (40) de fixation par rotation.

2. Support sur structure porteuse selon la revendication 1, **caractérisé en ce que** le corps de base (26) du support présente un corps d'immobilisation (47.1, 47.2) s'étendant transversalement ou perpendiculairement à l'axe de rotation (41) du corps (40) de fixation par rotation et **en ce que** le corps (40) de fixation par rotation présente un corps d'assujettissement (84.1, 84.2) s'étendant transversalement ou perpendiculairement à son axe de rotation (41), corps qui sont disposés et configurés en étant mutuellement adaptés de telle sorte que le corps d'assujettissement (84.1, 84.2) du corps (40) de fixation par rotation, dans la position (100) de verrouillage par rotation du corps (40) de fixation par rotation, engage par l'arrière le corps d'immobilisation (47.1, 47.2) du corps de base (26) du support, de sorte que le corps (40) de fixation par rotation est alors relié de manière assujettie au corps de base (26) du support, de manière à l'empêcher de se dégager et/ou de se retirer du corps de base (26) du support, au moins dans une direction parallèle à l'axe de rotation (41) du corps (40) de fixation par rotation.

3. Support sur structure porteuse selon la revendication 1, **caractérisé en ce que** le corps de base (26) du support présente un premier corps d'immobilisation (47.1) et un deuxième corps d'immobilisation (47.2), sachant que le premier corps d'immobilisation (47.1) et le deuxième corps d'immobilisation (47.2) sont disposés en vis-à-vis et s'étendent l'un vers l'autre dans une direction transversale ou perpendiculaire à l'axe de rotation (41) du corps (40) de fixation par rotation, et **en ce que** le corps (40) de fixation par rotation présente un premier corps d'assujettissement (84.1) et un deuxième corps d'assujettissement (84.2), sachant que le premier corps d'assujettissement (84.1) et le deuxième corps d'assujettissement (84.2) s'étendent en éloignement l'un de l'autre dans une direction transversale ou perpendiculaire à l'axe de rotation (41) du corps (40) de fixation par rotation, et sachant que le premier et le deuxième corps d'immobilisation (47.1, 47.2) ainsi que le premier et le deuxième corps d'assujettissement (84.1, 84.2) sont disposés et configurés en étant mutuellement adaptés de telle sorte que le premier corps d'assujettissement (84.1) du corps (40) de fixation par rotation, dans la position (100) de verrouillage par rotation du corps (40) de fixation par rotation, engage par l'arrière le premier corps d'immobilisation (47.1) du corps de base (26) du support et que le deuxième corps d'assujettissement (84.2) du corps (40) de fixation par rotation engage par l'arrière le deuxième corps d'immobilisation (47.2) du corps de base (26) du support, de sorte que le corps (40) de fixation par rotation est alors relié de manière assujettie au corps de base (26) du support, de manière à l'empêcher de se dégager et/ou de se retirer du corps de base (26) du support, au moins dans une direction parallèle à l'axe de rotation (41) du corps (40) de fixation par rotation.

4. Support sur structure porteuse selon la revendication 2 ou 3, **caractérisé en ce que** le ou chaque corps d'immobilisation (47.1, 47.2) du corps de base (26) du support est une branche ou une branche respective d'immobilisation (47.1, 47.2) et **en ce que** le ou chaque corps d'assujettissement (84.1, 84.2) du corps (40) de fixation par rotation est une branche ou une branche respective d'assujettissement (84.1, 84.2), sachant que la ou chaque branche d'immobilisation (47.1, 47.2) du corps de base (26) du support, dans la position (100) de verrouillage par rotation du corps (40) de fixation par rotation, s'engage dans une rainure ou une rainure respective d'assujettissement (85.1, 85.2) du corps (40) de fixation par rotation qui est délimitée par la ou chaque branche d'assujettissement (84.1, 84.2) du corps (40) de fixation par rotation, et/ou sachant que la ou chaque branche d'assujettissement (84.1, 84.2) du corps (40) de fixation par rotation, dans la position (100) de verrouillage par rotation du corps (40) de fixation par rotation, s'engage dans une rainure ou une rainure respective d'assujettissement (57.1, 57.2) du corps de base (26) du support qui est délimitée par la ou chaque branche d'immobilisation (47.1, 47.2) du corps de base (26) du support.

5. Support sur structure porteuse selon l'une des revendications précédentes, **caractérisé en ce que** le corps (40) de fixation par rotation présente une première face de butée (88.1) et **en ce que** le corps de base (26) du support présente une première butée (59) de limitation de rotation pour limiter une rotation du corps (40) de fixation par rotation dans une première direction de rotation, butée contre laquelle, lors d'une rotation du corps (40) de fixation par rotation dans la première direction de rotation, celui-ci peut venir buter par sa première face de butée (88.1), de sorte que le corps (40) de fixation par rotation ne peut pas être tourné dans la première direction de rotation au-delà de la position (99) d'immobilisation par rotation, et/ou **en ce que** le corps (40) de fixation par rotation présente une deuxième face de butée (88.2) et **en ce que** le corps de base (26) du support présente la ou une deuxième butée (59) de limitation de rotation pour limiter une rotation du corps (40) de fixation par rotation dans une deuxième direction de rotation, butée contre laquelle, lors d'une rotation du corps (40) de fixation par rotation dans la deuxième direction de rotation, celui-ci peut venir buter par sa deuxième face de butée (88.2), de sorte que le corps (40) de fixation par rotation ne peut pas être tourné dans la deuxième direction de rotation au-delà de la position (100) de verrouillage par rotation.

6. Support sur structure porteuse selon l'une des revendications précédentes, **caractérisé en ce que** la position (99) d'immobilisation par rotation du corps (40) de fixation par rotation est, par rapport à la position (100) de verrouillage par rotation du corps (40) de fixation par rotation, décalée d'un angle de rotation de plus de 45 degrés ou d'environ 90 degrés autour de l'axe de rotation (41) du corps (40) de fixation par rotation.

7. Support sur structure porteuse selon l'une des revendications précédentes, **caractérisé en ce que** le corps (40) de fixation par rotation présente une extrémité de fixation (91), et une extrémité d'actionnement (78) opposée à celle-ci dans la direction de l'axe de rotation (41) dudit corps.

8. Support sur structure porteuse selon la revendication 7, **caractérisé en ce que** le corps (40) de fixation par rotation présente à son extrémité de fixation (91) un élément (96) d'enclenchement ou d'encliquetage par l'intermédiaire duquel le corps (40) de fixation par rotation peut être relié de manière amovible à un logement d'enclenchement (55) du corps de base (26) du support, en formant une liaison par encliquetage (98).

9. Agencement de montage, qui comprend au moins un support (25) sur structure porteuse selon l'une des revendications précédentes et au moins un répartiteur de fluide (31) avec un boîtier (103) s'étendant sur une longueur de boîtier et dont les parois extérieures présentent au moins un premier logement d'enclenchement (38 ; 38.1, 38.3) et au moins un deuxième logement d'enclenchement (38 ; 38.2, 38.4), qui sont disposés et configurés de telle sorte que le premier élément d'enclenchement (36) de la région réceptrice (32) du support (25) sur structure porteuse peut être enclenché ou reçu en enclenchement dans ou sur le premier logement d'enclenchement (38 ; 38.1, 38.3) et que le deuxième élément d'enclenchement (37 ; 62, 63) de la région réceptrice (32) du support (25) sur structure porteuse peut être enclenché ou reçu en enclenchement dans ou sur le deuxième logement d'enclenchement (38 ; 38.2, 38.4), sachant que le répartiteur de fluide (31), au moyen de son premier logement d'enclenchement (38 ; 38.1), est enclenché ou reçu en enclenchement dans la région réceptrice (32) dans ou sur le premier élément d'enclenchement (36) de la région réceptrice (32), et sachant que le répartiteur de fluide (31), au moyen de son deuxième logement d'enclenchement,
soit, dans la position (99) d'immobilisation par rotation du corps (40) de fixation par rotation, est enclenché ou reçu en enclenchement dans la région réceptrice (32) dans ou sur la première partie (62), flexible, d'élément d'enclenchement du corps (40) de fixation par rotation,
soit, dans la position (100) de verrouillage par rotation, est enclenché ou reçu en enclenchement dans la région réceptrice (32) dans ou sur la deuxième partie, rigide, d'élément d'enclenchement du corps (40) de fixation par rotation.

10. Agencement de montage, qui comprend au moins un support (25) sur structure porteuse selon l'une des revendications 1 à 8 et au moins un répartiteur de fluide (31) avec un boîtier (103) s'étendant sur une longueur de boîtier et dont les parois extérieures présentent au moins un premier logement d'enclenchement (38 ; 38.1, 38.3) et au moins un deuxième logement d'enclenchement (38 ; 38.2, 38.4), qui sont disposés et configurés de telle sorte que le premier élément d'enclenchement (36) de la région réceptrice (32) du support (25) sur structure porteuse peut être enclenché ou reçu en enclenchement dans ou sur le premier logement d'enclenchement (38 ; 38.1, 38.3) et que le deuxième élément d'enclenchement (37 ; 62, 63) de la région réceptrice (32) du support (25) sur structure porteuse peut être enclenché ou reçu en enclenchement dans ou sur le deuxième logement d'enclenchement (38 ; 38.2, 38.4), sachant que le répartiteur de fluide (31), au moyen de son premier logement d'enclenchement (38 ; 38.1), est enclenché ou reçu en enclenchement dans ou sur le premier élément d'enclenchement (36) de la région réceptrice (32), et sachant que le répartiteur de fluide (31), au moyen de son deuxième logement d'enclenchement (38 ; 38.2),
soit, dans la position (99) d'immobilisation par rotation du corps (40) de fixation par rotation, est enclenché ou reçu en enclenchement dans ou sur la première partie (62), flexible, d'élément d'enclenchement du corps (40) de fixation par rotation de telle sorte que le répartiteur de fluide (31 ; 31.1, 31.2) est immobilisé dans la région réceptrice (32 ; 32.1, 32.2) dans une position de prémontage de manière à empêcher sa rotation involontaire et sa chute hors de la région réceptrice (32 ; 32.1, 32.2), position qui permet aussi bien une translation d'alignement du répartiteur de fluide (31 ; 31.1, 31.2) par rapport au corps (40) de fixation par rotation, et donc par rapport au corps de base (26) du support, que de retirer du corps de base (26) du support le répartiteur de fluide (31 ; 31.1,31.2),
soit, dans la position (100) de verrouillage par rotation, est enclenché ou reçu en enclenchement dans ou sur la deuxième partie (63), rigide, d'élément d'enclenchement du corps (40) de fixation par rotation de telle sorte que le répartiteur de fluide (31 ; 31.1, 31.2) est verrouillé dans la région réceptrice (32 ; 32.1, 32.2) dans une position (108) de montage final, dans laquelle le répartiteur de fluide (31) ne peut pas être retiré de la région réceptrice (32) sans utiliser un outil ou recourir à la force, au moins dans une direction parallèle à un plan de mouvement imaginaire contenant l'axe de rotation (41) du corps (40) de fixation par rotation.

11. Agencement de montage selon la revendication 9 ou 10, **caractérisé en ce que** le premier élément d'enclenchement (36) limite la région réceptrice (32) sur un premier côté et **en ce que**, dans la position (99) d'immobilisation par rotation du corps (40) de fixation par rotation, la première partie flexible (62) d'élément d'enclenchement limite la région réceptrice (32) sur un deuxième côté qui est opposé au premier côté, et **en ce que**, dans la position (100) de verrouillage par rotation du corps (40) de fixation par rotation, la deuxième partie rigide (63) d'élément d'enclenchement limite la région réceptrice (32) sur le deuxième côté.

12. Agencement de montage selon l'une des revendications 9 à 11, **caractérisé en ce que** le premier logement d'enclenchement (38 ; 38.1, 38.3) du répartiteur de fluide (31) est réalisé sous la forme d'une première rainure (38 ; 38.1, 38.3) ouverte vers l'extérieur, et **en ce que** le deuxième logement d'enclenchement (38 ; 38.2, 38.4) du répartiteur de fluide (31) est réalisé sous la forme d'une deuxième rainure (38 ; 38.2, 38.4) ouverte vers l'extérieur, qui s'étend parallèlement à la première rainure (38 ; 38.1, 38.3).

13. Procédé de montage d'un répartiteur de fluide (31) sur le support (25) sur structure porteuse selon l'une des revendications 1 à 8, sachant que le répartiteur de fluide (31) comprend un boîtier (103) s'étendant sur une longueur de boîtier et dont les parois extérieures présentent au moins un premier logement d'enclenchement (38 ; 38.1, 38.3) et au moins un deuxième logement d'enclenchement (38 ; 38.2, 38.4), qui sont disposés et configurés de telle sorte que le premier élément d'enclenchement (36) de la région réceptrice (32) du support (25) sur structure porteuse peut être enclenché ou reçu en enclenchement dans ou sur le premier logement d'enclenchement (38 ; 38.1, 38.3) et que le deuxième élément d'enclenchement (37 ; 62, 63) de la région réceptrice (32) du support (25) sur structure porteuse peut être enclenché ou reçu en enclenchement dans ou sur le deuxième logement d'enclenchement (38 ; 38.2, 38.4),
procédé qui comprend les étapes suivantes :
- fixation en position du corps de base (26) du support sur la structure porteuse par sa face (34) d'application sur structure porteuse ;
- introduction du premier élément d'enclenchement (36) de la région réceptrice (32) du corps de base (26) du support dans le premier logement d'enclenchement (38 ; 38.1) du répartiteur de fluide (31) ;
- vissage du répartiteur de fluide (31) dans la région réceptrice (32) du corps de base (26) du support, jusqu'à ce que la première partie flexible (62) d'élément d'enclenchement du corps (40) de fixation par rotation se trouvant dans sa position (99) d'immobilisation par rotation ou du corps (40) de fixation par rotation transféré dans sa position (99) d'immobilisation par rotation soit enclenchée ou reçue en enclenchement dans ou sur le deuxième logement d'enclenchement (38 ; 38.2) encore libre du répartiteur de fluide (31), sachant que le premier élément d'enclenchement (36) de la région réceptrice (32) est alors également enclenché ou reçu en enclenchement dans ou sur le premier logement d'enclenchement (38 ; 38.1) du répartiteur de fluide (31), de sorte que le répartiteur de fluide (31 ; 31.1, 31.2) est alors immobilisé dans la région réceptrice (32 ; 32.1, 32.2) dans une ou la position de prémontage de manière à empêcher sa rotation involontaire et sa chute hors de la région réceptrice (32 ; 32.1, 32.2), position qui permet aussi bien une translation d'alignement du répartiteur de fluide (31 ; 31.1, 31.2) par rapport au corps (40) de fixation par rotation, et donc par rapport au corps de base (26) du support, que de retirer du corps de base (26) du support le répartiteur de fluide (31 ; 31.1, 31.2).

14. Procédé selon la revendication 13, **caractérisé par** l'étape supplémentaire suivante :
- rotation du corps (40) de fixation par rotation autour de son axe de rotation (41) jusque dans la position (100) de verrouillage par rotation, dans laquelle la deuxième partie rigide (63) d'élément d'enclenchement du corps (40) de fixation par rotation est enclenchée ou reçue en enclenchement sur ou dans le deuxième logement d'enclenchement (38 ; 38.2) du répartiteur de fluide (31) de telle sorte que le répartiteur de fluide (31) est verrouillé dans la région réceptrice (32) dans une ou la position (108) de montage final, dans laquelle le répartiteur de fluide (31) ne peut pas être retiré de la région réceptrice (32) sans utiliser un outil ou recourir à la force, au moins dans une direction parallèle à un plan de mouvement imaginaire contenant l'axe de rotation (41) du corps (40) de fixation par rotation.

15. Procédé selon la revendication 13, **caractérisé par** l'étape supplémentaire suivante :
- rotation du corps (40) de fixation par rotation autour de son axe de rotation (41) jusque dans la position (100) de verrouillage par rotation, dans laquelle la deuxième partie rigide (63) d'élément d'enclenchement du corps (40) de fixation par rotation est enclenchée ou reçue en enclenchement sur ou dans le deuxième logement d'enclenchement (38 ; 38.2) du répartiteur de fluide (31), et dans laquelle la deuxième partie rigide d'élément d'enclenchement du corps de fixation par rotation et/ou au moins une partie rigide supplémentaire (69) d'élément d'enclenchement du corps (40) de fixation par rotation est enclenchée ou reçue en enclenchement sur ou dans un deuxième logement d'enclenchement (74.2) du corps de base (26) du support ou d'un ou du corps rigide (39.2) de fixation et/ou de soutien du corps de base (26) du support, de telle sorte que le répartiteur de fluide (31) est verrouillé dans la région réceptrice (32) dans une ou la position (108) de montage final, dans laquelle le répartiteur de fluide (31) ne peut pas être retiré de la région réceptrice (32) sans utiliser un outil ou recourir à la force, au moins dans une direction parallèle à un plan de mouvement imaginaire contenant l'axe de rotation (41) du corps (40) de fixation par rotation.
